# EUROPEAN PATENT APPLICATION

(11) **EP 4 793 760 A1**
(43) Date of publication of application: **19.08.2026**
(21) Application number: 25205888.8
(22) Date of filing: 30.09.2025
(51) Int. Cl.: G06F 8/60, G06F 9/445, B60R 16/02, B60W 50/00

(54) **METHOD AND SYSTEM FOR PRE-FETCHING AND DEPLOYING MICROSERVICES IN VEHICLES**

(30) Priority: 17.02.2025 IN 202541013577; 02.05.2025 US 202519196985
(71) Applicant: Wipro Limited, 560 035 Karnataka (IN)
(72) Inventor: KANALA, Kishore Reddy Krishna, 560035 Bangalore (IN); AGRAWAL, Rajeev, 560035 Bangalore (IN)
(74) Representative: Finnegan Europe LLP

(57) **Abstract**

A method for pre-fetching and deploying microservices in vehicles is disclosed. The method includes receiving, in vehicle, place details corresponding to each of plurality of places on user-selected route from server; transmitting feature request to server for identification of one or more of plurality of feature IDs and corresponding one or more of plurality of feature details; receiving one or more of plurality of feature IDs and corresponding one or more of plurality of feature details from server in response to feature request; transmitting microservice download request to server for retrieval of set of microservice packages corresponding to user selection of set of feature IDs from one or more of plurality of feature IDs; receiving set of microservice packages corresponding to set of feature IDs from server in response to microservice download request; managing deployment of set of microservices corresponding to set of microservices packages based on predefined criteria.

## Description

### Technical Field

This disclosure relates generally to microservice architecture, and more particularly to method and system for pre-fetching and deploying microservices in vehicles.

### Background

Software architecture in vehicles is migrating from a monolithic architecture towards a microservice architecture due to ease of software maintenance and upgrading in the vehicles. In the microservice architecture, each software feature supported by a Software Defined Vehicle (SDV) may be installed in the form of a microservice. Usually, there may be hundreds (or thousands) of features supported by the vehicle. Therefore, a huge number of microservices may be required to be installed in the vehicles.

The vehicle manufacturer (i.e., Original Equipment Manufacturer (OEM) may perform a preliminary market research to understand feature requirements of all users and may then pre-install some features in the vehicle which are generally necessary to all (or most) of the users. However, determining the feature requirements of any user individually for their corresponding vehicles beforehand is not a feasible approach. Additionally, even after determining the feature requirements, storing the specific features in a vehicle storage (i.e., memory), and then deploying and running the stored features is neither optimal for storage nor computationally efficient. Existing techniques for deploying microservices in real-time fail to consider scenarios of poor network connectivity during a trip. There is, therefore, a need for techniques that provide for pre-fetching of the microservices to the vehicle as and when required during or prior to the trip.

### SUMMARY

In one embodiment, a method for pre-fetching and deploying microservices in vehicles is disclosed. In one example, the method may include receiving, in a vehicle, place details corresponding to each of a plurality of places on a user-selected route from a server. It should be noted that the user-selected route may include a source point and a destination point. It should also be noted that the place details corresponding to each of the plurality of places are dynamically mapped to one or more of a plurality of feature identifiers (IDs) in a server storage. The method may further include transmitting a feature request to the server for identification of the one or more of the plurality of feature IDs and corresponding one or more of the plurality of feature details. It should be noted that the feature request may include vehicle details of the vehicle and the received place details. The method may further include receiving the one or more of the plurality of feature IDs and corresponding one or more of the plurality of feature details from the server in response to the feature request. Each of the plurality of feature IDs is mapped to one or more microservice IDs in the server storage. The method may further include transmitting a microservice download request to the server for retrieval of a set of microservice packages corresponding to a user selection of a set of feature IDs from the one or more of the plurality of feature IDs. It should be noted that the microservice download request may include the vehicle details and a set of microservice IDs of the set of microservice packages corresponding to the set of feature IDs. The method may further include receiving the set of microservice packages corresponding to the set of feature IDs from the server in response to the microservice download request. The method may further include managing deployment of a set of microservices corresponding to the set of microservice packages based on predefined criteria.

In another embodiment, a computing device for pre-fetching and deploying microservices in vehicles is disclosed. In one example, the computing device may include a processor and a memory communicatively coupled to the processor. The memory may store processor-executable instructions, which, on execution, may cause the processor to receive, in a vehicle, place details corresponding to each of a plurality of places on a user-selected route from a server. It should be noted that the user-selected route may include a source point and a destination point. It should also be noted that the place details corresponding to each of the plurality of places are dynamically mapped to one or more of a plurality of feature IDs in a server storage. The processor-executable instructions, on execution, may further cause the processor to transmit a feature request to the server for identification of the one or more of the plurality of feature IDs and corresponding one or more of the plurality of feature details. It should be noted that the feature request may include vehicle details of the vehicle and the received place details. The processor-executable instructions, on execution, may further cause the processor to receive the one or more of the plurality of feature IDs and corresponding one or more of the plurality of feature details from the server in response to the feature request. Each of the plurality of feature IDs is mapped to one or more microservice IDs in the server storage. The processor-executable instructions, on execution, may further cause the processor to transmit a microservice download request to the server for retrieval of a set of microservice packages corresponding to a user selection of a set of feature IDs from the one or more of the plurality of feature IDs. It should be noted that the microservice download request may include the vehicle details and a set of microservice IDs of the set of microservice packages corresponding to the set of feature IDs. The processor-executable instructions, on execution, may further cause the processor to receive the set of microservice packages corresponding to the set of feature IDs from the server in response to the microservice download request. The processor-executable instructions, on execution, may further cause the processor to manage deployment of a set of microservices corresponding to the set of microservice packages based on predefined criteria.

In yet another embodiment, a method for identifying and preparing microservices for vehicles is disclosed. In one example, the method may include receiving a feature request from a computing device for a user-selected route between a source point and a destination point. It should be noted that the feature request may include vehicle details of a vehicle and place details corresponding to each of a plurality of places on the user-selected route. The place details corresponding to each of the plurality of places are dynamically mapped to one or more of a plurality of feature IDs in a server storage. The method may further include identifying the one or more of the plurality of feature IDs and corresponding one or more of the plurality of feature details from the server storage, based on the feature request. The method may further include transmitting the one or more of the plurality of feature IDs and corresponding one or more of the plurality of feature details to the computing device. Each of the plurality of feature IDs is mapped to one or more microservice IDs in the server storage. The method may further include receiving a microservice download request from the computing device for retrieval of a set of microservice packages corresponding to a user selection of a set of feature IDs from the one or more of the plurality of feature IDs. It should be noted that the microservice download request may include the vehicle details and a set of microservice IDs of the set of microservice packages corresponding to the set of feature IDs. The method may further include transmitting the set of microservice packages corresponding to the set of feature IDs to the computing device in response to the microservice download request.

In yet another embodiment, a server for identifying and preparing microservices for vehicles is disclosed. In one example, the server may include a processor and a memory communicatively coupled to the processor. The memory may store processor-executable instructions, which, on execution, may cause the processor to receive a feature request from a computing device for a user-selected route between a source point and a destination point. It should be noted that the feature request may include vehicle details of a vehicle and place details corresponding to each of a plurality of places on the user-selected route. It should also be noted that the place details corresponding to each of the plurality of places are dynamically mapped to one or more of a plurality of feature IDs in a server storage. The processor-executable instructions, on execution, may further cause the processor to identify the one or more of the plurality of feature IDs and corresponding one or more of the plurality of feature details from the server storage, based on the feature request. The processor-executable instructions, on execution, may further cause the processor to transmit the one or more of the plurality of feature IDs and corresponding one or more of the plurality of feature details to the computing device. Each of the plurality of feature IDs is mapped to one or more microservice IDs in the server storage. The processor-executable instructions, on execution, may further cause the processor to receive a microservice download request from the computing device for retrieval of a set of microservice packages corresponding to a user selection of a set of feature IDs from the one or more of the plurality of feature IDs. It should be noted that the microservice download request may include the vehicle details and a set of microservice IDs of the set of microservice packages corresponding to the set of feature IDs. The processor-executable instructions, on execution, may further cause the processor to transmit the set of microservice packages corresponding to the set of feature IDs to the computing device in response to the microservice download request.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** is a block diagram of an exemplary trip preparation system for pre-fetching and deploying microservices in vehicles, in accordance with some embodiments of the present disclosure.
**FIG. 2** illustrates a functional block diagram of an exemplary trip preparation system for pre-fetching and deploying microservices in vehicles, in accordance with some embodiments of the present disclosure.
**FIGS. 3A** **and** **3B** illustrate a flow diagram of an exemplary process for pre-fetching and deploying microservices in vehicles, in accordance with some embodiments of the present disclosure.
**FIGS. 4A** **and** **4B** illustrate a flow diagram of an exemplary process for identifying and preparing microservices for vehicles, in accordance with some embodiments of the present disclosure.
**FIG. 5** illustrates a detailed communication flow for retrieving place details corresponding to a plurality of places on a user-selected route, in accordance with some embodiments of the present disclosure.
**FIG. 6** is an exemplary place details table representing place details, in accordance with some embodiments of the present disclosure.
**FIGS. 7A** **and** **7B** illustrate a detailed communication flow for retrieving one or more of a plurality of feature details and a list of microservices, in accordance with some embodiments of the present disclosure.
**FIG. 8** is an exemplary place detail-feature mapping table representing feature IDs mapped with place details, in accordance with some embodiments of the present disclosure.
**FIG. 9** is an exemplary feature list table representing feature details corresponding to feature IDs, in accordance with some embodiments of the present disclosure.
**FIG. 10** is an exemplary feature-microservice mapping table representing microservice IDs mapped with a corresponding feature IDs, in accordance with some embodiments of the present disclosure.
**FIG. 11** illustrates a detailed communication flow for downloading microservices to vehicles, in accordance with some embodiments of the present disclosure.
**FIG. 12** is an exemplary microservice list table representing microservice details, in accordance with some embodiments of the present disclosure.
**FIG. 13** is an exemplary microservice software table representing microservice address mapped with a trimmed place detail table, in accordance with some embodiments of the present disclosure.
**FIGS. 14A** **and** **14B** illustrate a detailed communication flow for deploying microservices in vehicles, in accordance with some embodiments of the present disclosure.
**FIG. 15** is a block diagram of an exemplary computer system for implementing embodiments consistent with the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

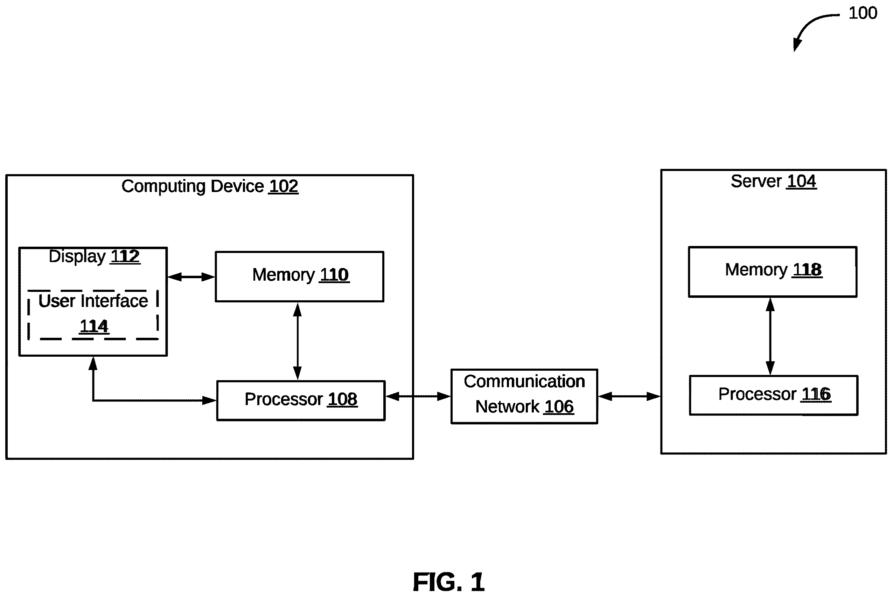

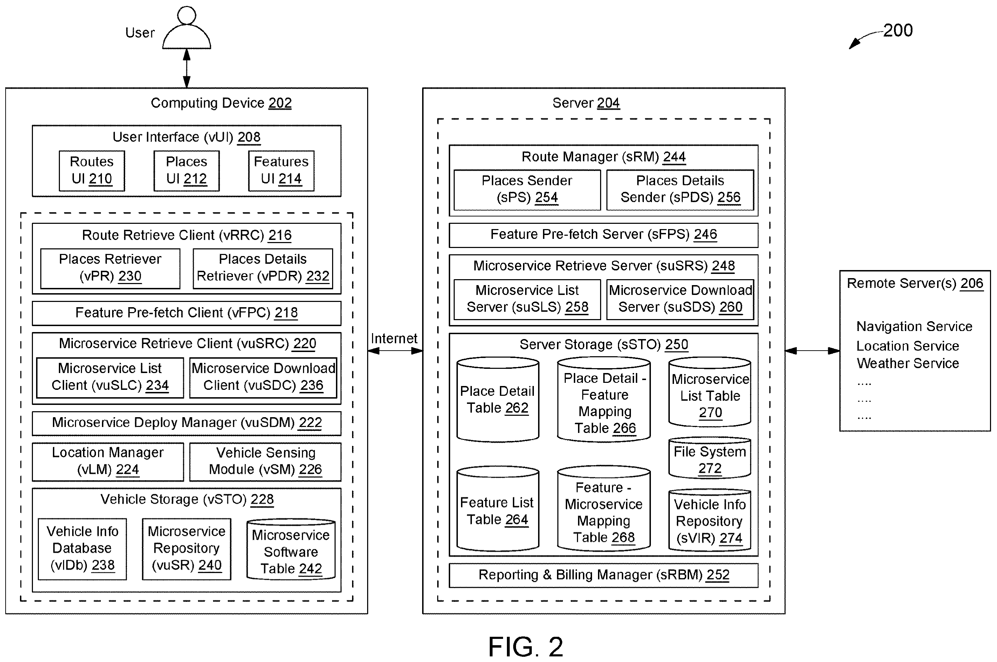

Referring now to FIG. 1, an exemplary trip preparation system 100 for pre-fetching and deploying microservices in vehicles is illustrated, in accordance with some embodiments of the present disclosure. The trip preparation system 100 may include a computing device 102 in a vehicle communicatively connected to a server 104 over a communication network 106. The vehicle may be a Software Defined Vehicle (SDV). The computing device 102 may be based on a microservice software architecture. By way of an example, the server 104 may be an Original Equipment Manufacturer (OEM) server or an external server. The computing device 102 may pre-fetch microservices from the server 104. Further, the computing device 102 may deploy the microservices in the vehicle based on a real-time feature requirement of the vehicle during a journey. This is elaboratively discussed in conjunction with FIG. 2.

In some embodiments, the computing device 102 may include one or more processors 108 and a memory 110. Further, the memory 110 may store instructions that, when executed by the one or more processors 108, may cause the one or more processors 108 to pre-fetch and deploy microservices in the vehicle, in accordance with aspects of the present disclosure. The memory 110 may also store various data (for example, a microservice software table, and the like) that may be captured, processed, and/or required by the computing device 102. The computing device 102 may further include a display 112. The computing device 102 may interact with a user (such as a driver or a vehicle owner) via one or more User Interfaces (Uls) 114 accessible via the display 112.

In some embodiments, the computing device 102 may interact with the server 104 over the communication network 106 for sending or receiving various data. The communication network 106 may include, for example, but may not be limited to, a wireless fidelity (Wi-Fi) network, a light fidelity (Li-Fi) network, a local area network (LAN), a wide area network (WAN), a metropolitan area network (MAN), a satellite network, the internet, a fiber optic network, a coaxial cable network, an infrared (IR) network, a radio frequency (RF) network, and a combination thereof.

The server 104 may also include one or more processors 116 and a memory 118. Further, the memory 118 may store instructions that, when executed by the one or more processors 116, may cause the one or more processors 116 to identify and prepare microservices for the vehicle, in accordance with aspects of the present disclosure. The memory 118 may also store various data (for example, a place detail table, a feature list table, a place detail-feature mapping table, a feature-microservice mapping table, a microservice list table, and the like) that may be captured, processed, and/or required by the server 104.

Referring now to FIG. 2, a functional block diagram of an exemplary trip preparation system 200 for pre-fetching and deploying microservices in vehicles is illustrated, in accordance with some embodiments of the present disclosure. FIG. 2 is explained in conjunction with FIG. 1. The trip preparation system 200 may be analogous to the trip preparation system 100. The trip preparation system 200 may include a computing device 202 (analogous to the computing device 102), a server 204 (analogous to the server 104), and a remote server(s) 206. By way of an example, the vehicle may be, but may not be limited to, a car, a truck, a bus, a taxi, or the like. The server 204 may be an OEM server or an external (trusted third party) server where the microservice packages may be hosted. The remote server 206 may provide one or more external services (e.g., a navigation service, a location service, a weather service, and the like). Each of the vehicle, the server 204, and the remote server 206 may include one or more processors and a memory (not shown in figure).

The computing device 202 may be connected to the server 204 through internet. A user (such as a driver, a passenger, or a vehicle owner) may interact with the computing device 102 through one or more vehicle Uls (vUls) 208 (analogous to the one or more Uls 114) accessible via a display of the computing device 202. The one or more vUls 208 may include a routes UI 210, a places UI 212, and a features UI 214. The one or more vUls 208 may be one of, for example, a physical interface, a graphical interface (e.g., key-based, touch based, etc.), voice command, and the like, to receive user inputs from the user. In an embodiment, the vUls 208 may be presented within the vehicle itself through the computing device 202 or through an application on a user device.

The computing device 202 may include, within a memory (such as the memory 110) a route retrieve client (vRRC) 216, a feature pre-fetch client (vFPC) 218, a microservice retrieve client (vuSRC) 220, a microservice deploy manager (vuSDM) 222, a location manager (vLM) 224, a vehicle sensing module (vSM) 226, and a vehicle storage (vSTO) 228. The vRRC 216 may include a places retriever (vPR) 230, and a places details retriever (vPDR) 232. The vuSRC 220 may include a microservice list client (vuSLC) 234 and a microservice download client (vuSDC) 236. The vSTO 228 may include a vehicle information table (vlDb) 238, a microservice repository (vuSR) 240, and a microservice software table 242.

The server 204 may include, within a memory, a route manager (sRM) 244, a feature pre-fetch server (sFPS) 246, a microservice retrieve server (suSRS) 248, a server storage (sSTO) 250, and a reporting and billing manager (sRBM) 252. The sRM 244 may include a places sender (sPS) 254 and a places details sender (sPDS) 256. The suSRS 248 may include a microservice list server (suSLS) 258 and a microservice download server (suSDS) 260. The sSTO 250 may include a place detail table 262 (or a place detail database), a feature list table 264 (or a feature list database), a place detail-feature mapping table 266 (or a place detail-feature mapping database), a feature microservice mapping table 268 (or a feature microservice mapping database), a microservice list table 270 (or a microservice list database), a file system 272, and a vehicle information repository (sVIR) 274.

Initially, the vPR 230 may receive a source point and a destination point for a journey from the user using the routes UI 210. The source point may be a current location of the vehicle (or some other location from where the user wants to start the journey). The destination point may be a point where the user wants to end the journey of the vehicle. The user may provide the source point and the destination point at any time of the journey as required (e.g., before starting the journey or during the journey (i.e., in situations such as taking a detour, change of plans, etc.)). Further, the routes UI 210 may send the source point and the destination point to the vPR 230.

Further, the vPR 230 may send a request to the sPS 254 of the server 204 for retrieving one or more routes and a plurality of places on each of the one or more routes between the source point and the destination point. The request may include the source point and the destination point. The sPS 254 may retrieve the plurality of places on each of the one or more routes from one or more external navigation services on the remote server 206. The one or more navigation services may be, for example, but may not be limited to, Google maps, Naver maps, HERE maps, Mapmylndia, or any other open source or proprietary navigation service.

Further, the one or more external navigation services may provide the plurality of places on each of the one or more routes to the sPS 254. Further, the sPS 254 may send the one or more routes and the plurality of places on the one or more routes between the source point and the destination point to the vPR 230.

In some embodiments, the sPS 254 may determine one specific route among the one or more routes between the source point and the destination point based on pre-defined criteria. The pre-defined criteria may be, for example, but may not be limited to, shortest distance, smallest time, and/or a route having least number of place conditions categories. The sPS 254 may then send the plurality of places corresponding to the one specific route to the vPR 230.

Further, the vPR 230 may render, on the places UI 212, the one or more routes (or the specific route from the one or more routes) between the source point and the destination point, and the plurality of places on each of the one or more routes (or the specific route).

Further, the places UI 212 may present the one or more routes and the plurality of places corresponding to each of the one or more routes between the source point and the destination point to the user. Further, the user may select one specific route from the one or more routes between the source point and the destination point. In some embodiments, if the user may not select any of the routes from the rendered one or more routes (e.g., as the user prefers to take some other alternate route or cancels the journey) in a pre-defined time, the places UI 212 may present a notification (e.g., the trip preparation process is aborted, or cancelled) to the user.

Further, the places UI 212 may invoke the vPDR 232 of the vRRC 216 by sending the user-selected route and the corresponding plurality of places. The place details may include, for example, but may not be limited to, road, weather, traffic, location, or any other information related to the places. Further, upon receiving the user-selected route and the corresponding plurality of places, the vPDR 232 may send a request to the sPDS 256 of the sRM 244 for receiving the place details corresponding to each of the plurality of places on the user-selected route. The request may include the plurality of places corresponding to the user-selected route (i.e., selected plurality of places).

Further, the sPDS 256 may send the selected plurality of places to one or more external services on the remote server 206. The one or more external services may include, for example, but may not be limited to, a location service from transport department, a weather service, and/or a navigation service. Further, the sPDS 256 may receive the place details corresponding to the selected plurality of places from the one or more external services. The place details may include, for example, but may not be limited to, a place name, a place address, a place attribute, a place sub-attribute, and a place condition forecast. Further, upon receiving the place details, the sPDS 256 may store the place details into the sSTO 250. Additionally, the sPDS 256 may send the place details corresponding to each of the selected plurality of places to the vPDR 232. Further, the vPDR 232 may send the place details corresponding to each of the selected plurality of places to the vFPC 218.

Further, the vFPC 218 may send a request to the vSTO 228 for vehicle details. The vehicle details may include, for example, but may not be limited to, a vehicle identification number (VIN). Further, vSTO 228 may extract the vehicle details from the vIDb 238. Further, the vSTO 228 may send the vehicle details to the vFPC 218. Upon receiving the vehicle details, the vFPC 218 may send a feature request to the sFPS 246 for identification of relevant features for the vehicle when traveling along the user-selected route. The feature request may include the vehicle details of the vehicle and the received place details.

The sFPS 246 may then send a request to the sSTO 250 for the identification of the relevant features. The request may include the vehicle details of the vehicle and the received place details. Further, upon receiving the request, the sSTO 250 may extract one or more of a plurality of feature identifiers (IDs) from the place detail-feature mapping table 266 using the vehicle details and the place details. It should be noted that the plurality of feature IDs may be unique IDs corresponding to a plurality of features available (and/or compatible) for the vehicle. Additionally, the one or more of the plurality of feature IDs may correspond to the relevant features from the plurality of features. Further, the sSTO 250 may send the one or more of the plurality of feature IDs to the sFPS 246. Additionally, the sSTO 250 may extract a place condition threshold and a real time analysis attribute from the place detail-feature mapping table 266. Further, the sSTO 250 may store the extracted place condition threshold, the real time analysis attribute, and the one or more of the plurality of feature IDs corresponding to the place details to the place detail table 262 of the server 204.

Again, the sFPS 246 may send a request to the sSTO 250 for identification of feature details corresponding to each of the one or more of the plurality of feature IDs. The request may include the one or more of the plurality of feature IDs. The one or more of the corresponding plurality of feature details may include, for example, but may not be limited to, a feature name, a feature description, a feature cost, a feature subscription period, a customer rating, and a number of downloads. Further, upon receiving the request, the sSTO 250 may extract the one or more plurality of feature details from the feature list table 264 of the server 204. Further, the sSTO 250 may send the one or more plurality of feature details corresponding to the one or more plurality of feature IDs to the sFPS 246. Additionally, the sSTO 250 may store the one or more plurality of feature details corresponding to the one or more plurality of feature IDs to the place detail table 262.

Further, the sFPS 246 may send the one or more plurality of feature IDs and the corresponding one or more plurality of feature details to the vFPC 218. Further, the vFPC 218 may render, on the features UI 214, the one or more of the plurality of feature IDs and the corresponding one or more of the plurality of feature details. In some embodiments, the user may add one or more additional features from remaining of the plurality of features to the rendered one or more features using the features UI 214 as per the current requirement of the vehicle. In some other embodiments, the user may modify or delete one or more features from the rendered one or more features using the feature UI 214 as per the current requirement of the vehicle. Further, the features UI 214 may receive the user selection of a set of feature IDs from the one or more of the plurality of feature IDs. In some embodiments, if the user may not confirm a selection of any feature IDs from the rendered one or more plurality of feature IDs within a pre-defined timeout. In such cases, the features UI 214 may render a notification to the user that the trip preparation process is aborted.

Further, upon receiving the set of feature IDs, the features UI 214 may invoke the vuSLC 234 of the vuSRC 220 by passing the set of feature IDs. Further, the vuSLC 234 may send a microservice download request to the server 204. The microservice download request may include the vehicle details, and a set of microservice IDs of the set of microservice packages corresponding to the set of feature IDs.

To retrieve the set of microservice packages, the vuSLC 234 may send a request to the vSTO 228 to extract the vehicle details of the vehicle. Further, the vSTO 228 may extract the vehicle details from the vIDb 238 based on the request. Further, the vSTO 228 may send the vehicle details of the vehicle to the vuSLC 234. Prior to transmitting the microservice download request to the suSLS 258, authentication of the vehicle owner through an authentication technique may take place. This may prevent unauthorized downloading of microservices in the computing device 202. To authenticate the vehicle owner, the suSLS 258 may send a request to the sSTO 250 to receive contact details of the vehicle owner. The request may include the vehicle details of the vehicle.

The contact details may include, for example, mobile number, or email address. Further, the sSTO 250 may extract the contact details of the vehicle owner from the sVIR 274. It should be noted that the contact details of the vehicle owner may be pre-stored in the sVIR 274. Further, the sSTO 250 may send the contact details of the vehicle owner to the suSLS 258. Further, upon receiving the contact details, the suSLS 258 may send a One-Time Password (OTP) on the extracted contact details of the vehicle. Alternatively, the suSLS 258 may send a Universal Resource Location (URL) to the contact details of the vehicle owner to receive a response from the vehicle owner instead of sending the OTP.

Further, the vehicle owner may send an approval (or confirmation) to the server (i.e., the suSLS 258) by entering the received OTP in any mobile application (e.g., OEM mobile application) or any web-portal (e.g., an OEM web-portal) within the predefined time-out limit. Alternatively, the vehicle owner may click on the URL to share the approval corresponding to the authentication.

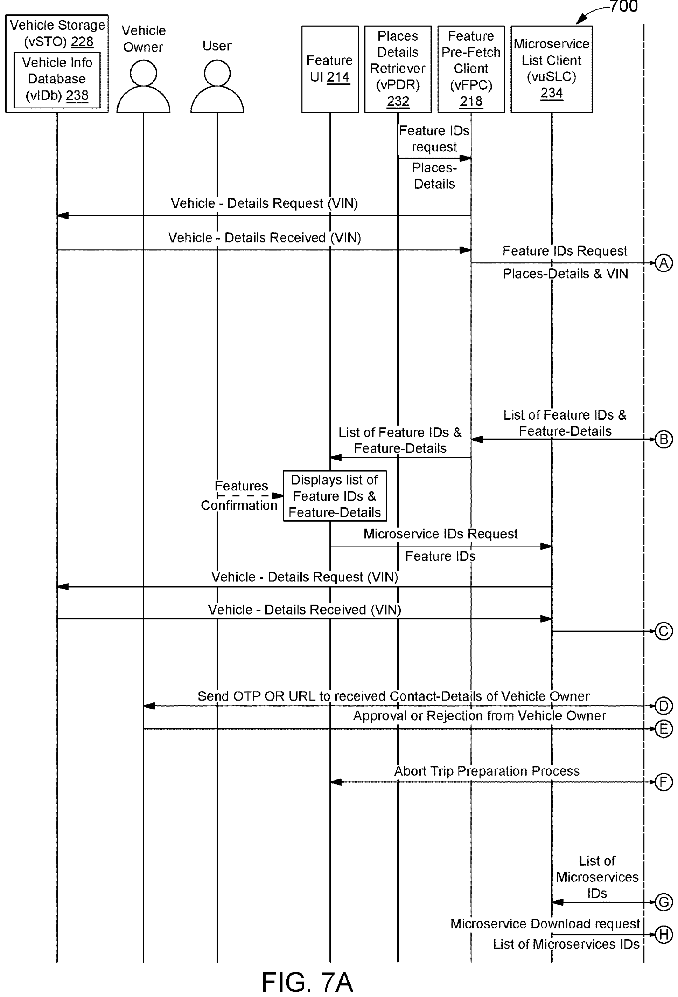

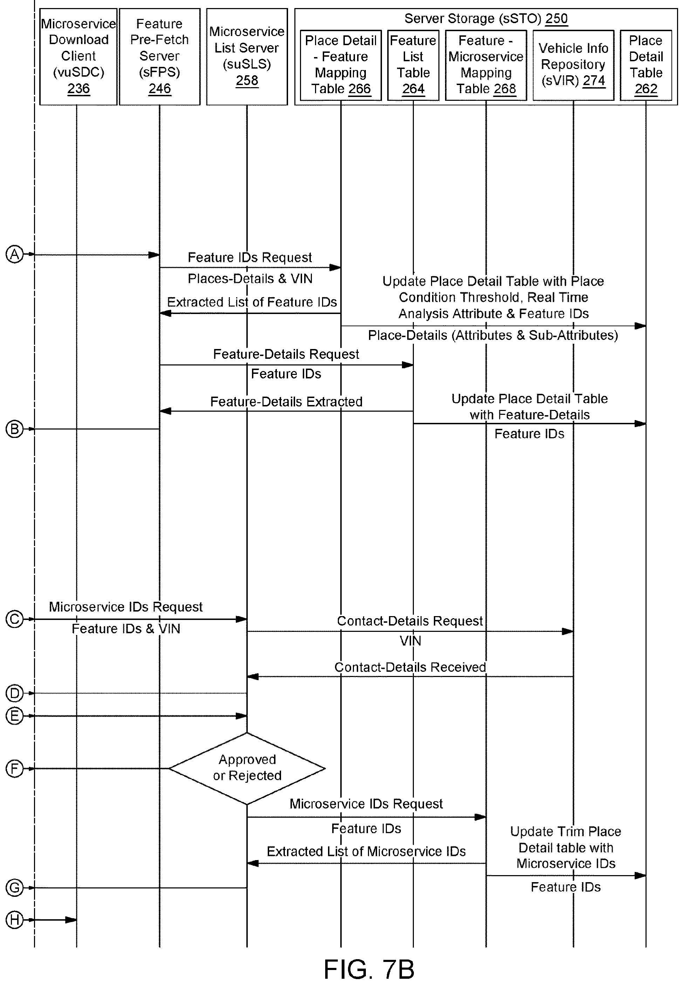

Further, the suSLS 258 may check whether the OTP (or URL) received from the vehicle owner is matched or not. If the received OTP (or the accepted URL) is matched, then the suSLS 258 may confirm the approval corresponding to the authentication of the vehicle owner. If the received OTP (or accepted URL) is not matched, the suSLS 258 may notify the vuSLC 234 (or the vehicle owner) that the trip preparation process is aborted through the features UI 214. Some examples of unsuccessful authentication may include entering wrong OTP, URL not accepted, no response received from the vehicle owner within predefined time-out, and the like. This is further explained in greater detail in conjunction with FIGS. 7A and 7B. It should be noted that in some other embodiments, any other authentication techniques may be used to authenticate the vehicle owner.

Further, upon successful authentication of the vehicle owner, the suSLS 258 may send a microservice ID request to the sSTO 250 to receive a set of microservice IDs. The microservice ID request may include the set of feature IDs and the vehicle details. Further, the sSTO 250 may extract the set of microservice IDs from the feature microservice-mapping table 268 within the server 204. Further, the sSTO 250 may send the set of microservice IDs corresponding to the user selection of the set of feature IDs to the suSLS 258. Additionally, the sSTO 250 may store the set of microservice IDs corresponding to the user selection of the feature IDs within the place detail table 262. Further, the sSTO 250 may trim rows of the place detail table 262 for each blank corresponding to the set of microservice IDs to obtain the only set of features and the set of microservice IDs corresponding to the user selected route in the place detail table 262.

Further, upon receiving the set of microservice IDs, the suSLS 258 may send the set of microservice IDs to the vuSLC 234. Further, the vuSLC 234 may invoke the vuSDC 236 by sending the set of microservice IDs. Further, the vuSDC 236 may send the microservice download request to the suSDS 260 to download the set of microservices to the vehicle. Further, upon receiving the set of microservice IDs, the suSDS 260 may send a request to the sSTO 250 to retrieve microservice details corresponding to the set of microservice IDs. The request may include the set of microservice IDs. The microservice details may include, for example, but may not be limited to, a microservice description, and a microservice address.

Further, the sSTO 250 may extract (or retrieve) the microservice details from the microservice list table 270 within the server 204 using the set of microservice IDs. Further, the sSTO 250 may send the microservice details corresponding to the set of the microservice IDs to the suSDS 260. Further, the suSDS 260 may extract one or more addresses from the microservice details and request to the extracted address to download the microservice packages corresponding to the set of microservice IDs.

In some embodiment, if the one or more addresses may be a file path (i.e., the microservice packages may be stored within the server 204), in such cases, the suSDS 260 may send a request to the sSTO 250 within the server 204 to download the microservice packages corresponding to the extracted one or more addresses. In some other embodiments, if the one or more addresses may be any URL (i.e., the microservice packages may be stored within the remote server 206), in such cases, the suSDS 260 may send a request to the remote server 206 to download the microservice packages corresponding to the URL address.

Further, the suSDS 260 may receive (i.e., download) the microservice packages from sSTO 250 (or the remote server 206) corresponding to the set of microservice IDs. Additionally, the suSDS 260 may receive the trimmed places detail table from the sSTO 250. Further, the suSDS 260 may send the set of microservice packages and the trimmed place details table to the vuSDC 236. Further, the vuSDC 236 may store the set of microservice packages and the trimmed place details table within the vSTO 228. Thus, the set of microservice packages is pre-fetched (i.e., downloaded in advance) before deployment based on place details or user requirements. Further, upon storing the set of microservice packages and the trimmed place detail table in the vSTO 228, the vuSDM 222 may manage deployment of the set of microservices corresponding to the set of microservice packages based on predefined criteria. Further, vuSDM 222 may validate the predefined criteria for deployment of each of the set of microservices.

In an embodiment, if the user may want to deploy the list of microservices in the vehicle based on the real-time feature requirement of the vehicle, in such cases, the vuSDC 236 may invoke the vLM 224 to receive locations from one or more external services (e.g., a location service, a navigation service, and the like) on the remote server 206. In some embodiments, vLM 224 may send a request to the one or more external services (such as, the location service) on the remote server 206 to receive nearby N-addresses range from the current location of the vehicle. It should be noted that the N-addresses range may also include the current location of the vehicle. Alternatively, in case of network unavailability, the vLM 224 may send a request to a Global Positioning System (GPS) of the vehicle to receive N-addresses range from the current location of the vehicle.

Further, the vLM 224 may receive the N-addresses range on the user selection route from the current location of the vehicle from the location service on the remote server 206 (or the GPS system of the vehicle). Further, upon receiving the N-addresses range, the vLM 224 may invoke the vuSDM 222 by sending the N-addresses range. Further, the vuSDM 222 may send a request to the vSTO 228 to receive deployment details corresponding to each of the set of microservice packages. The deployment details may be, for example, but may not be limited to, the place address, the place attribute, the place-sub attribute, the set of feature IDs, the place condition threshold, the real time analysis attribute, the feature subscription, the set of microservice IDs, and the N-microservices addresses.

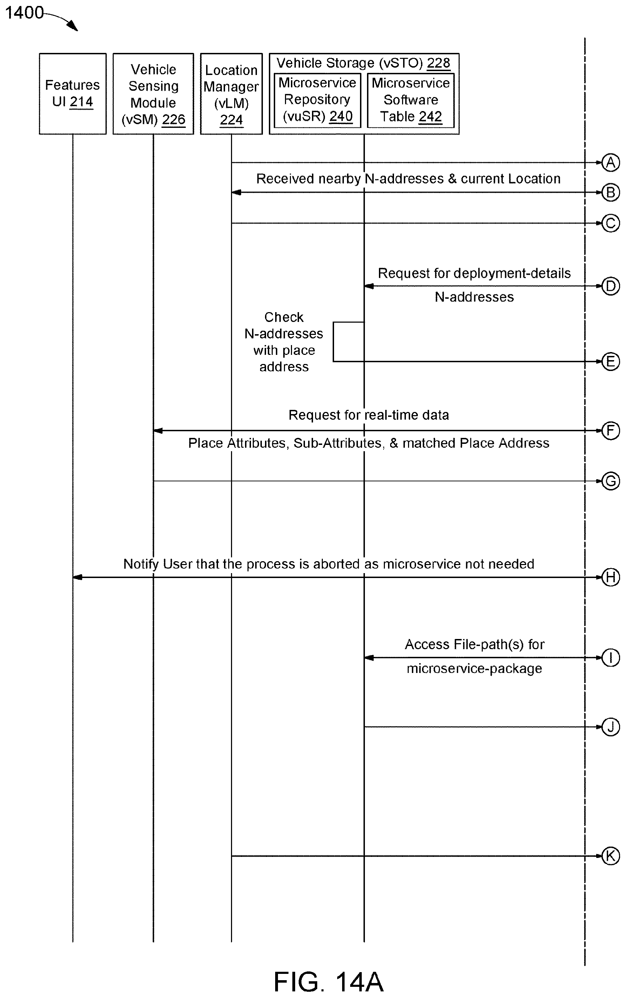

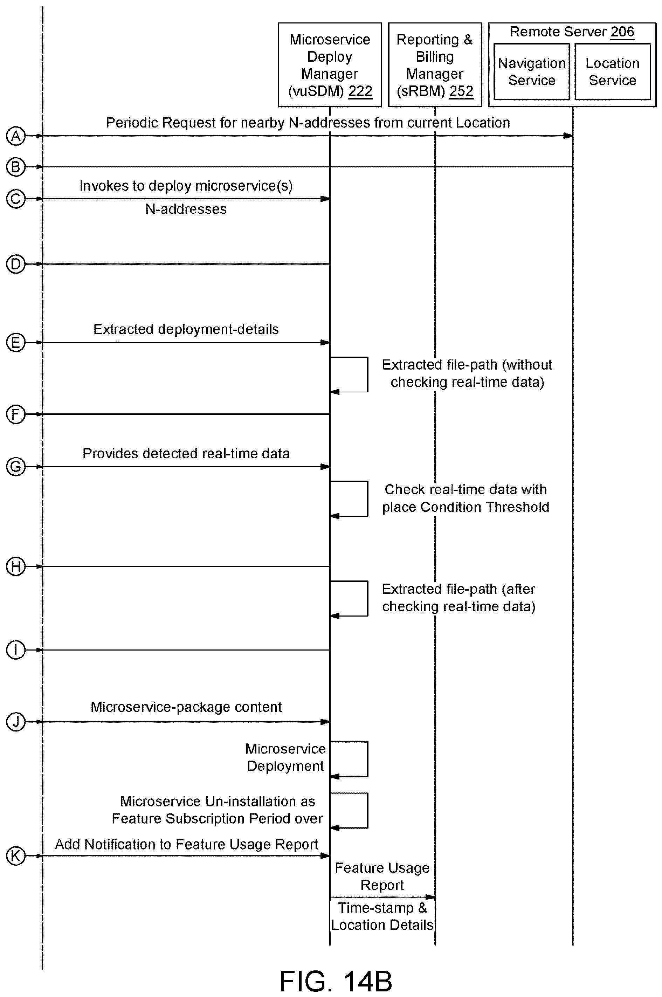

Further, upon receiving the request, the vSTO 228 may compare each of the N-addresses range with the place address values. It should be noted that the place address values may be stored in the microservice software table 242. Further, upon successful comparison, the vSTO 228 may extract the deployment details from the microservice software table 242. Further, the vSTO 228 may send the deployment details to the vuSDM 222. Further, the vuSDM 222 may check each row-value (e.g., Yes or No) from a real time analysis attribute column of the received deployment details. By way of an example, if the row-value may be 'No', then, the vuSDM 222 may extract the file path from the corresponding row of microservice address column. This is further explained in greater detail in conjunction with FIGS. 14A and 14B. The vuSDM 222 may extract data from the corresponding row of a feature subscription period column of the deployment details. If the row value may be 'Yes', then, the vuSDM 222 may extract the corresponding row data from a place attribute column and a place sub attribute column of the deployment details. Further, the vuSDM 222 may send a request to the vSM 226 to receive a real-time data corresponding to the place attribute value, the place sub-attribute value, and the matched place address value. The request may include the place attribute value, the place sub-attribute value, and the place address value.

Further, the vSM 226 may collect the real-time data corresponding to the place attribute value, the place sub-attribute value, and the matched place address value using a sensor of the vehicle. The sensor may be, for example, but may not be limited to, a temperature sensor, a precipitation monitor, and a visibility detector. Further, the vSM 226 may send the real-time data to the vuSDM 222. Further, the vuSDM 222 may compare the real-time data with the corresponding place condition threshold column of the deployment details. By way of an example, if the real-time data may be less than the place condition threshold value, then, the vuSDM 222 may notify the user of the vehicle that the microservice deployment process is aborted via the features UI 214.

Alternatively, if the real-time data may be greater than or equal to the place condition threshold value, then, the vuSDM 222 may extract the file-path from corresponding row of microservice address column and extract data from corresponding row of feature subscription period column of the deployment-details. Further, the vuSDM 222 may access the file paths of the vuSR 240 of the vSTO 228 to receive the set of microservice packages for deployment. Further, the vuSDM 222 may deploy the list of microservices corresponding to the set of microservice packages in the vehicle.

In some embodiments, if the user may want to deploy each of the list of microservices in the vehicle at a time, in such cases, the vuSDM 222 may deploy each of the list of microservices in the vehicle simultaneously as soon as the list of microservices is downloaded in the vehicle. In some other embodiments, the list of microservices may be deployed based on availability of computer resources in the vehicle, in such cases, the vuSDM 222 may automatically pick up the most likely used microservice from the list of microservices. Further, the vuSDM 222 may deploy the microservice (if that microservice is not deployed previously in the vehicle). It should be noted that, in such cases, the deployed microservices may be uninstalled when the computer resources of the computing device 202 may require other microservice for the vehicle. By way of an example, the vuSDM 222 may select the 'RAIN_BASED_WINDSHIELD_WIPER' (i.e., a microservice required for the vehicle during the rainy season) for the vehicle. It should be noted that the computer resources of the vehicle (i.e., the computing device 202) may estimate the deployment of the downloaded microservices, prior to initiation of the journey by the vehicle. Therefore, the vuSDM 222 may not fail while the list of microservices is deployed in the vehicle during the journey.

Further, upon deploying each of the microservices in the vehicle, the vuSDM 222 may determine a feature subscription period corresponding to each of the set of microservices. Additionally, the vuSDM 222 may monitor a time-period of each of the set of microservices deployed in the vehicle. The vuSDM 222 may compare the monitored time-period with the corresponding feature subscription period of each of the set of microservices. Further, based on the comparison, the vuSDM 222 may un-install the deployed set of microservices from the vehicle once the monitored time-period is above the feature subscription period. Alternatively, the vuSDM 222 may un-install the deployed set of microservices from the vehicle based on a request received from the user via the features UI 214 at any time during the journey.

It should be noted that all such aforementioned modules 216 - 274 may be represented as a single module or a combination of different modules. Further, as will be appreciated by those skilled in the art, each of the modules 216 - 274 may reside, in whole or in parts, on one device or multiple devices in communication with each other. In some embodiments, each of the modules 216 - 274 may be implemented as dedicated hardware circuit comprising custom application-specific integrated circuit (ASIC) or gate arrays, off-the-shelf semiconductors such as logic chips, transistors, or other discrete components. Each of the modules 216 - 274 may also be implemented in a programmable hardware device such as a field programmable gate array (FPGA), programmable array logic, programmable logic device, and so forth. Alternatively, each of the modules 216 - 274 may be implemented in software for execution by various types of processors (e.g., processor 108 and processor 116). An identified module of executable code may, for instance, include one or more physical or logical blocks of computer instructions, which may, for instance, be organized as an object, procedure, function, or other construct. Nevertheless, the executables of an identified module or component need not be physically located together but may include disparate instructions stored in different locations which, when joined logically together, include the module and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for pre-fetching and deploying microservices in vehicles. For example, the exemplary trip preparation system 100 and the associated computing device 102, may pre-fetch and deploy microservices in vehicles, by the processes discussed herein. In particular, as will be appreciated by those of ordinary skill in the art, control logic and/or automated routines for performing the techniques and steps described herein may be implemented by the trip preparation system 100 and the computing device 102 either by hardware, software, or combinations of hardware and software. For example, suitable code may be accessed and executed by the one or more processors on the trip preparation system 100 to perform some or all of the techniques described herein. Similarly, application specific integrated circuits (ASICs) configured to perform some or all of the processes described herein may be included in the one or more processors on the trip preparation system 100.

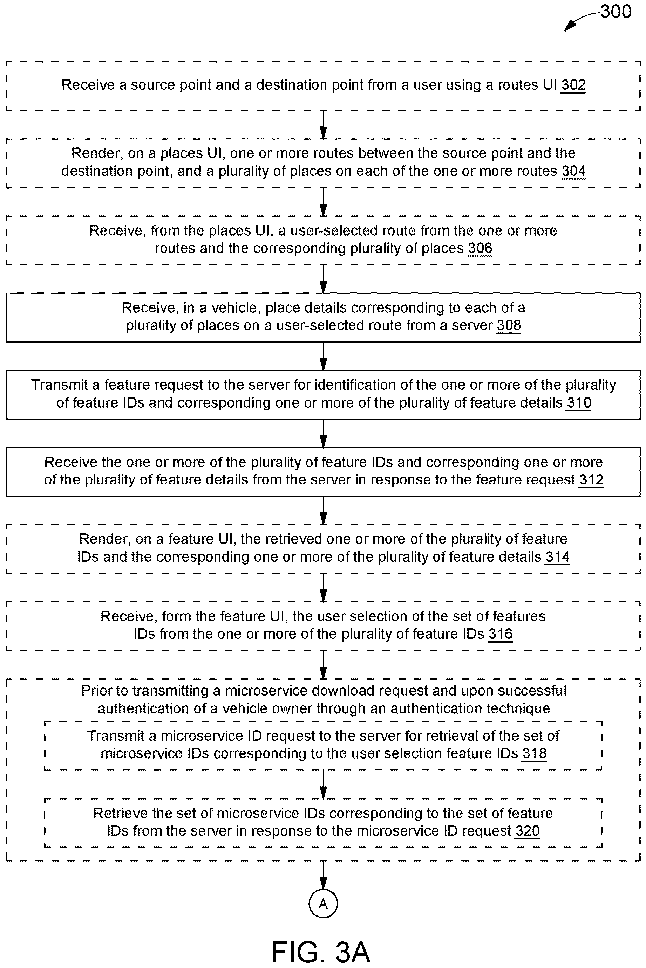

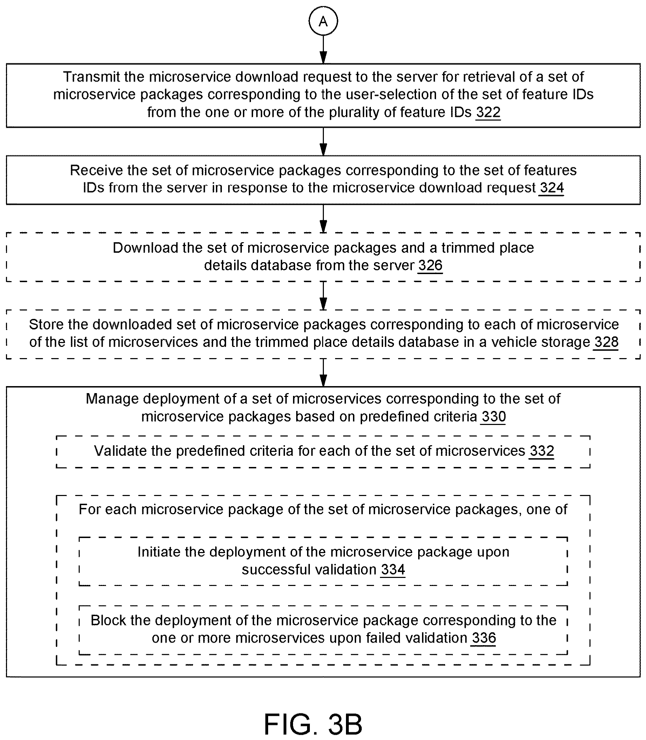

Referring now to FIGS. 3A and 3B, an exemplary process 300 for pre-fetching and deploying microservices in vehicles is illustrated via a flow chart, in accordance with some embodiments of the present disclosure. The process 300 may be implemented by the computing device 102 of the trip preparation system 100. In some embodiments, the process 300 may include receiving, by the vPR 230, a source point and a destination point from a user using a routes UI 210, at step 302. Upon receiving the source point and the destination point, the process 300 may include rendering, by the vPR 230, on a places UI 212, one or more routes between the source point and the destination point, and a plurality of places on each of the one or more routes, at step 304. It should be noted that the one or more routes and the plurality of places on each of the one or more routes are obtained from a navigation service. The navigation service may be a navigation service on a remote server (such as the remote server 206).

Further, the process 300 may include receiving, by vPDR 232, from the places UI, a user-selected route from the one or more routes and the corresponding plurality of places, at step 306. Further, once the user-selected route is received, the process 300 may include receiving, by vPDR 232, in a vehicle, place details corresponding to each of a plurality of places on the user-selected route from a server (such as the server 204), at step 308. It should be noted that the user-selected route may include the source point and the destination point. The place details corresponding to each of the plurality of places are dynamically mapped to one or more of a plurality of feature identifiers (IDs) in a server storage (such as the server storage 250).

Further, upon receiving the place details, the process 300 may include transmitting, by vFPC 218, a feature request to the server for identification of the one or more of the plurality of feature IDs and corresponding one or more of a plurality of feature details, at step 310. The feature request may include vehicle details of the vehicle and the received place details.

Further, the process 300 may include receiving, by the vFPC 218, the one or more of the plurality of feature IDs and corresponding one or more of the plurality of feature details from the server in response to the feature request, at step 312. It should be noted that each of the plurality of feature IDs is mapped to one or more microservice IDs in the server storage.

Further, the process 300 may include rendering, by the vFPC 218 on a features UI (such as the features UI 214), the retrieved one or more of the plurality of feature IDs and the corresponding one or more of the plurality of feature details, at step 314. Further, the process 300 may include receiving, by the vuSLC 234 from the features UI, the user selection of the set of feature IDs from the one or more of the plurality of feature IDs, at step 316.

Further, prior to transmitting a microservice download request and upon successful authentication of a vehicle owner through an authentication technique, the process 300 may include transmitting, by vuSLC 234, a microservice ID request to the server for retrieval of a set of microservice IDs corresponding to the user selection of the set of feature IDs, at step 318. The microservice ID request may include the set of feature IDs and the vehicle details. Upon receiving the set of microservice IDs, the process 300 may include retrieving, by the vuSLC 234, the set of microservice IDs corresponding to the set of feature IDs from the server in response to the microservice ID request, at step 320. The list of microservices may include a list of microservice IDs.

Further, upon receiving the set of microservice IDs corresponding to the set of feature IDs, the process 300 may include transmitting, by vuSLC 234, the microservice download request to the server for retrieval of a set of microservice packages corresponding to the user selection of the set of feature IDs from the one or more of the plurality of feature IDs, at step 322. It should be noted that the microservice download request may include the vehicle details and the set of microservice IDs of the set of microservice packages corresponding to the set of feature IDs.

Further, the process 300 may include receiving, by vuSDC 236, the set of microservice packages corresponding to the set of feature IDs from the server in response to the microservice download request, at step 324. Further, to receive the set of microservice packages in the vehicle, the process 300 may include downloading, by vuSDC 236, the set of microservice packages and a trimmed place details table from the server, at step 326. It should be noted that the trimmed place details table may include a mapping between each of the plurality of places and the set of microservice IDs corresponding to the set of microservices. Further, the process 300 may include storing, by vuSDC 236, the downloaded set of microservice packages corresponding to each microservice of the list of microservices and the trimmed place details table in the vehicle data storage, at step 328.

Further, the process 300 may include managing, by a vuSDM 222, deployment of a set of microservices corresponding to the set of microservice packages based on predefined criteria, at step 330. The step 330 may include steps 332, 334, and 336. The process 300 may include validating, by the vuSDM 222, the predefined criteria for each of the set of microservices, at step 332. Further, for each microservice package of the set of microservice packages, the process 300 may include initiating, by the vuSDM, the deployment of the microservice package upon successful validation, at step 334. Further, for each microservice package of the set of microservice packages, the process 300 may include blocking, by the vuSDM 222, the deployment of the microservice package corresponding to the one or more microservices upon failed validation, at step 336.

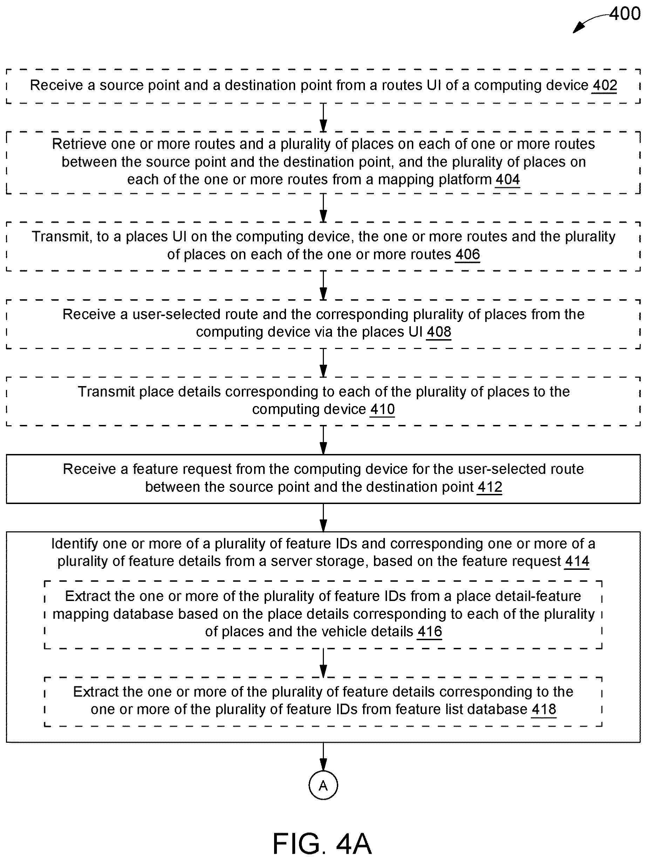

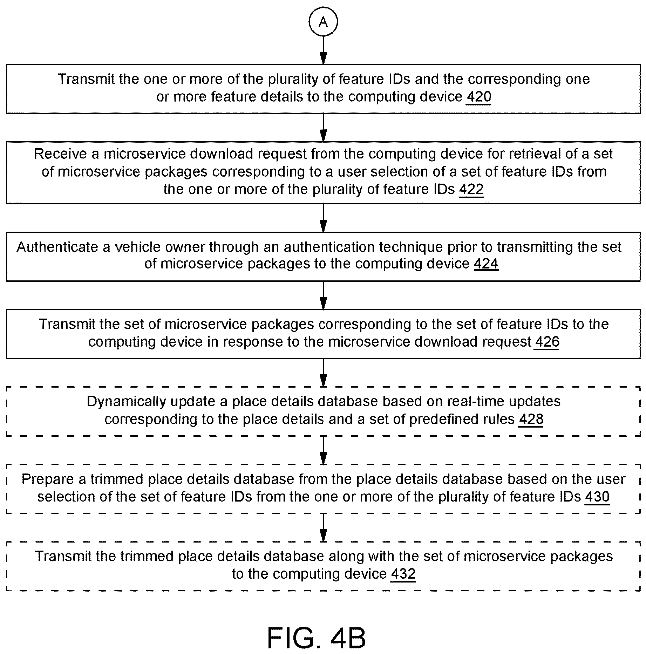

Referring now to FIGS. 4A and 4B, an exemplary process 400 for identifying and preparing microservices for vehicles is illustrated via a flow chart, in accordance with some embodiments of the present disclosure. The process 400 may be implemented by the computing device 102 of the trip preparation system 100. FIGS. 4A and 4B are explained in conjunction with FIGS. 3A and 3B. In some embodiments, the process 400 may include receiving, by sPS 254, a source point and a destination point from a routes UI (such as the routes UI 210) of a computing device (such as the computing device 102), at step 402. Further, upon receiving the source point and the destination point, the process 400 may include retrieving, by the sPS 254, one or more routes and a plurality of places on each of the one or more routes between the source point and the destination point, and the plurality of places on each of the one or more routes from a navigation service, at step 404.

Further, the process 400 may include transmitting, by the sPS 254 to a places UI (such as the places UI 212) on the computing device, the one or more routes and the plurality of places on each of the one or more routes, at step 406. Further, the process 400 may include receiving, by the sPDS 256, a user-selected route and the corresponding plurality of places from the computing device via the places UI, at step 408. Further, upon receiving the user-selected route and the corresponding plurality of places, the process 400 may include transmitting, by the sPDS 256, place details corresponding to each of the plurality of places to the computing device, at step 410.

Further, once the place details are transmitted, the process 400 may include receiving, by sFPS 246, a feature request from the computing device for the user-selected route between the source point and the destination point, at step 412. The feature request may include vehicle details of a vehicle and the place details corresponding to each of the plurality of places on the user-selected route. The place details corresponding to each of the plurality of places are dynamically mapped to one or more of a plurality of feature identifiers (IDs) in a server storage (such as the server storage 250).

Further, the process 400 may include identifying, by the sFPS 252, the one or more of the plurality of feature IDs and corresponding one or more of the plurality of feature details from the server storage, based on the feature request, at step 414. The step 414 may include steps 416, and 418. To identify the one or more of the plurality of feature IDs and the corresponding one or more of the plurality of feature details, the process 400 may include extracting, by the sSTO 250, the one or more of the plurality of feature IDs from a place detail-feature mapping table (such as the place detail-feature mapping table 266) based on the place details corresponding to each of the plurality of places and the vehicle details, at step 416. It should be noted that the place detail-feature mapping table may include a mapping between the place details, a set of predefined rules, and the plurality of feature IDs. The place detail-feature mapping table is pre-stored in the server storage.

Further, the process 400 may include extracting, by the sSTO 250, the one or more of the plurality of feature details corresponding to the one or more of the plurality of feature IDs from a feature list table (such as the feature list table 264), at step 418. It should be noted that the feature list table may include a mapping between the plurality of feature IDs and the corresponding plurality of feature details. The feature list table is pre-stored in the server storage.

Further, once the one or more of the plurality of feature IDs and the corresponding one or more of the plurality of feature details is identified, the process 400 may include transmitting, by sFPS 246, the one or more of the plurality of feature IDs and corresponding one or more of the plurality of feature details to the computing device, at step 420. Each of the plurality of feature IDs is mapped to one or more microservice IDs in the server storage.

Further, the process 400 may include receiving, by the suSLS 258, a microservice download request from the computing device for retrieval of a set of microservice packages corresponding to a user selection of a set of feature IDs from the one or more of the plurality of feature IDs, at step 422. It should be noted that the microservice download request may include the vehicle details and a set of microservice IDs of the set of microservice packages corresponding to the set of feature IDs.

Further, prior to transmitting the set of microservice packages to the computing device, the process 400 may include, authenticating, by the suSLS 258, a vehicle owner through an authentication technique, at step 424. Further, upon successful, authentication of the vehicle owner, the process 400 may include transmitting, by suSLS 258, the set of microservice packages corresponding to the set of microservice IDs to the computing device in response to the microservice download request, at step 426.

Further, once the set of microservice packages is transmitted, the process 400 may include dynamically updating, by the suSDS 260, a place details table (such as the place detail table 262) based on real-time updates corresponding to the place details and a set of predefined rules, at step 428. It should be noted that the place details table may include a mapping of the place details of each of the plurality of places, the set of predefined rules, the plurality of feature IDs, the corresponding plurality of feature details, and the one or more microservice IDs corresponding to each of one or more of the plurality of feature IDs.

Further, the process 400 may include preparing, by the sSTO 250, a trimmed place details table from the place details table based on the user selection of the set of feature IDs from the one or more of the plurality of feature IDs, at step 430. Further, the process 400 may include transmitting, by the suSDS 260, the trimmed place details table along with the set of microservice packages to the computing device.

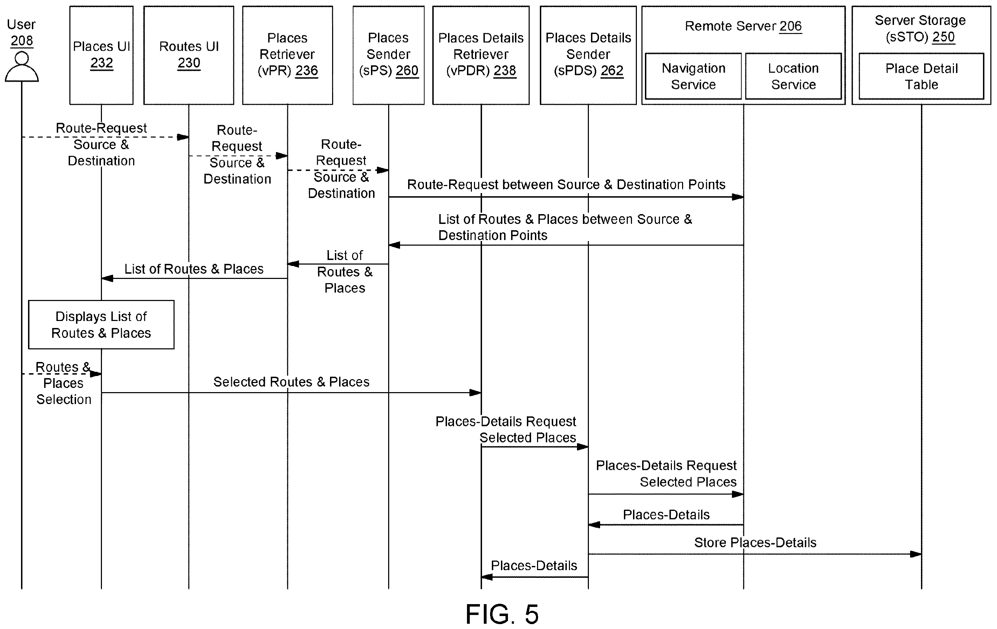

Referring now to FIG. 5, a detailed exemplary communication flow 500 for retrieving place details corresponding to a plurality of places on a user-selected route is illustrated, in accordance with some embodiments of the present disclosure. The user (e.g., a vehicle driver) may initiate the communication flow 500 during the start of a journey. Initially, at the start of the journey, the user may provide a source point and a destination point through the routes UI 210 (e.g., a graphical interface) to the computing device 202. In an embodiment, the routes UI 210 may be present within the vehicle. In some embodiments, the routes UI 210 may be present in mobile phone (or any other computing device) of the user.

Further, upon receiving the source point and the destination point, the routes UI 210 may provide the source point and the destination point to the vPR 230. Further, the vPR 230 may send a route request to the sPS 254 to receive a plurality of places on each of one or more routes between the source point and the destination point. The route request may include the source point and the destination point. Further, upon receiving the route request, the sPS 254 may send the route request to an external navigation service (e.g., Google Maps) on the remote server 206 to receive the plurality of places on each of the one or more routes between the source point and the destination point. Further, the sPS 254 may receive the plurality of places on each of the one or more routes from the external navigation service.

Further, the sPS 254 may send the plurality of places corresponding to each of the one or more routes to the vPR 230. Alternatively, the sPS 254 may determine one specific route between the source point and the destination point among the one or more routes based on predefined criteria (such as shortest distance, smallest time, least number of place conditions categories, and the like). Upon determining the one specific route, the sPS 254 may send the plurality of places on the corresponding one specific route to the vPR 230. Further, the vPR 230 may provide the plurality of places corresponding to each of the one or more routes to the places UI 212. Alternatively, the vPR 230 may provide the plurality of places corresponding to one specific route to the places UI 212.

Further, the places UI 212 may render (or display) the list of places on the corresponding one or more routes to the user to receive a set of user selected route from the user. To receive the user-selected route, the user may select a route and the corresponding plurality of places through the places UI 212. In some embodiments, if the user may not select any of the rendered routes (e.g., as the user prefers some other alternate route, cancel the journey, and the like) in a predefined time out. In such cases, the places UI 212 may render a notification to the user that the trip preparation process is aborted.

Further, upon receiving the user-selected route, the places UI 212 may invoke the vPDR 232 by passing the plurality of places on the corresponding user-selected route. Further, the vPDR 232 may send a place detail request to the sPDS 256 to receive place details (e.g., road, traffic, weather, or any other location related information) corresponding to each of the plurality of places on the user-selected route. Further, sPDS 256 may send the place detail request to an external service (e.g., a location service from the transport department, a weather service, a navigation service, and the like) on the remote server 206 to receive the place details corresponding to each of the plurality of places on the user-selected route.

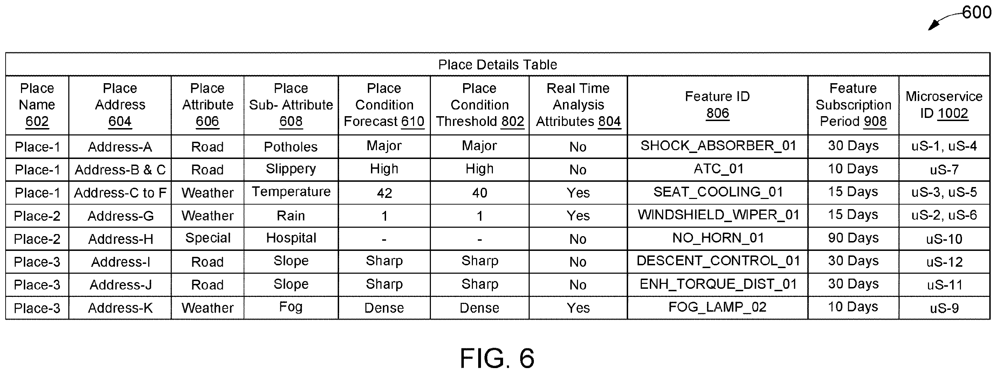

Further, the sPDS 256 may receive the place details corresponding to each of the plurality of places on the user-selected route from the external service. The place details may include, for example, but may not be limited to, a place name, a place address, a place attribute, a place sub-attribute, and a place condition forecast. This is further explained in greater detail in conjunction with FIG. 6. Further, the sPDS 256 may send the place details corresponding to each of the plurality of places on the user-selected route to the sSTO 250. Further, the sSTO 250 may store the place details in the place detail table 262. Additionally, the sPDS 256 may send the place details to the vPDR 232.

Referring now to FIG. 6, an exemplary place detail table 600 (such as the place detail table 262) representing place details corresponding to a plurality of places on the user selected route is illustrated, in accordance with some embodiment of the present disclosure. FIG. 6 is explained in conjunction with FIG. 5. The place detail table 600 may be used to store place details (such as a place name, a place address, a place attribute, place, a place sub-attribute, and a place condition forecast).

The place detail table 600 may include data that is retrieved from the external services on the remote server 206. Additionally, the place detail table 600 may include data that retrieved from other tables of the sSTO 250. It should be noted that only one instance table may be created corresponding to each of the vehicle journey. By way of an example, the place detail table 600 is presented in a tabular format. The place detail table 600 may include a column for place name 602, a column for place address 604, a column for place attribute 606, a column for place sub-attribute 608, and a column for place condition forecast 610.

The place name 602 may include the name of each of the plurality of places between the source point and the destination point corresponding to the user-selected route. The place address 604 may include location (or coordinate of the points) corresponding to the plurality of places between the source point and the destination point. Additionally, the place address 604 may include coordinate of a single point or a range of coordinates corresponding to the multiple points of the plurality of places. The place attribute 606 may include attributes of each of the plurality of places (such as road, weather, special points, and the like).

The place sub-attribute 608 may include characteristics of the place attributes. By way of an example, for a place attribute (e.g., road), the place sub-attributes may be, for example, but may not be limited to, potholes, slippery, slopes, sharp turns, and speed breakers. Similarly, for a place attribute (e.g., weather), the place sub-attributes may be, for example, but may not be limited to, temperature, rain, fog, and pollution. For a place attributes (e.g., special points), the place sub-attributes may be, for example, but may not be limited to, hospitals, and schools. The place condition forecast 610 may include forecasted values corresponding to the place sub-attributes, that is expected at the place based on the vehicle's arrival time at the place.

By way of an example, following are some exemplary place details corresponding to each of the plurality of places on the user selected route presented in the place detail table 600. Remaining place details can be referred to in the place detail table 600 presented in FIG. 6.

For the first place on the user-selected route, the place name 602 may be 'Place 1', the place address 604 may be 'Address-A', the place attribute 606 may be 'Road', the place sub-attribute 608 may be 'Potholes' and the place condition forecast 610 may be 'Major'.

For the first place on the user-selected route, the place name 602 may be 'Place 1', the place address 604 may be 'Address- C and F', the place attribute 606 may be 'Weather', the place sub-attribute 608 may be 'Temperature', and the place condition forecast 610 may be '42'.

For the second place on the user-selected route, the place name 602 may be 'Place 2', the place address 604 may be 'Address H', the place attribute 606 may be 'Special', the place sub-attribute 608 may be 'Hospital', and the place condition forecast 610 may be 'Not Available'.

Referring now to FIGS. 7A - 7B, a detailed exemplary communication flow 700 for receiving one or more plurality of feature IDs and corresponding one or more of a plurality of feature details is illustrated, in accordance with some embodiments of the present disclosure. FIGS. 7A - 7B are explained in conjunction with FIGS. 5 and 6. Initially, the vPDR 232 may receive the place details corresponding each of the plurality of places from the sPDS 256 that is retrieved and stored previously through the communication flow 500. Upon receiving the place details, the vPDR 232 may invoke the vFPC 218 to identify the one or more of the plurality of feature IDs and the corresponding one or more of the plurality of feature details. The one or more of the plurality of feature details may be, for example, but may not be limited to, a feature cost, a feature subscription, a customer rating, and a number of downloads.

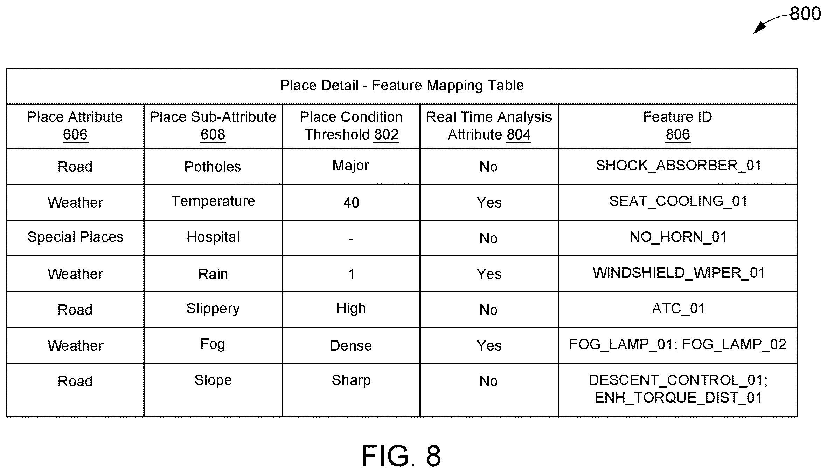

Further, the vFPC 218 may send a vehicle detail request to the vSTO 228 to extract vehicle details (e.g., a Vehicle Identification Number (VIN)) corresponding to the vehicle. Further, the vSTO 228 may extract the vehicle details from the vIDb 238 based on the vehicle detail request. Further, the vSTO 228 may send the vehicle details to the vFPC 218. Further, the vFPC 218 may send a feature request to the sFPS 246 to identify the one or more of the plurality of feature IDs and the corresponding one or more of the plurality of feature details. The feature request may include the vehicle details of the vehicle and the received place details. To identify the one or more of the plurality of feature IDs, the sFPS 246 may send a feature ID request to the sSTO 250 for identification of one or more of the plurality of feature IDs. The feature ID request may include the vehicle details of the vehicle and the place details. Further, the sSTO 250 may extract the one or more of the plurality of feature IDs from the place detail - feature mapping table 266 using the vehicle details (i.e., the VIN) and the place details. This is further explained in greater detail in conjunction with FIG. 8.

In particular, the sSTO 250 may extract a place condition threshold, a real time analysis attribute (i.e., Yes or No), and the one or more of the plurality of feature IDs using the vehicle details and the place details from the place detail - feature mapping table 266. Further, the sSTO 250 may store the place condition threshold, the real time analysis attribute, and the one or more of the plurality of feature IDs corresponding to the place details to the place detail table 600. Further, the sSTO 250 may send the one or more of the plurality of feature IDs to the sFPS 246.

To identify the one or more of the plurality of feature details, the sFPS 246 may send a feature detail request to the sSTO 250 to extract the one or more of the plurality of feature details. The feature detail request may include the one or more of the plurality of feature IDs. Further, the sSTO 250 may extract the one or more of the plurality of feature details from the feature list table 264 using the one or more of the plurality of feature IDs. Further, the sSTO 250 may send the one or more of the plurality of feature details corresponding to the one or more of the plurality of feature IDs to the sFPS 246. Additionally, the sSTO 250 may store some of the one or more of the plurality of feature details (e.g., a feature subscription period, and the like) to the place detail table 600 corresponding to the one or more of the plurality of feature IDs.

Further, the sFPS 246 may send the one or more of the plurality of feature IDs and the corresponding one or more of the plurality of feature details to the vFPC 218. Further, the vFPC 218 may send the one or more of the plurality of feature IDs and the corresponding one or more of the plurality of feature details to the features UI 214. Further, the features UI 214 may render the one or more of the plurality of feature IDs and the corresponding one or more of the plurality of feature details to the user to obtain the user selection of a set of feature IDs from the one or more of the plurality of feature IDs.

In some embodiments, the user may add one or more features to the vehicle through the features UI 214 based on their personal requirement, preference, and affordability. By way of an example, the user may confirm a feature with the free subscription, if both options are available (i.e., the free subscription or the paid subscription). By way of another example, the user may confirm a feature that has the highest customer ratings or a greater number of downloads. In some other embodiments, the user may subtract (or redact) one or more features from the vehicle as per the requirements.

In some other embodiments, if the user may not confirm any features from rendered one or more of the plurality of features within a predefined timeout, in such cases, the features UI 214 may render a notification to the user that the trip preparation process is aborted via a graphical interface. By way of an example, the user may not confirm any features in one of the cases, such as if the user may not want to spend money, or the customer ratings may not seem satisfied, and the like.

Further, upon receiving the set of feature IDs, the features UI 214 may invoke the vuSLC 234 to identify a list of microservices corresponding to the set of feature IDs by passing the set of feature IDs. Upon receiving the set of feature IDs, the vuSLC 234 may send a request to the vSTO 228 to extract the vehicle details of the vehicle. Further, the vSTO 228 may extract the vehicle details of the vehicle from the vIDb 238. Further, the vSTO 228 may send the vehicle details to the vuSLC 234. Upon receiving the vehicle details, the vuSLC 234 may send a request to the suSLS 258 to receive the list of microservices corresponding to the set of feature IDs. The request may include the set of feature IDs and the vehicle details.

Prior to sending the request to the suSLS 258 for receiving the list of microservices, an authentication of a vehicle owner through an authentication technique may take place. The vehicle owner may be any person on which the vehicle motor is registered. The authentication of the vehicle owner may be required because the user of the vehicle may be one of, for example, any family member, a chauffeur (or driver), a friend, a passenger, and the like instead of the vehicle owner. Alternatively, the user may also be the vehicle owner.

To authenticate the vehicle owner, the suSLS 258 may send a contact-details request to the sSTO 250 to extract contact-details of the vehicle owner. The contact-details request may include the vehicle details (i.e., the VIN) of the vehicle. The contact-details may include, for example, but may not be limited to, a mobile number, and email address, corresponding to the vehicle details. Further, the sSTO 250 may extract the contact details of the vehicle owner from the sVIR 274. Further, the sSTO 250 may send the contact details corresponding to the vehicle owner to the suSLS 258.

Upon receiving the contact details, the suSLS 258 may send a One-Time Password (OTP) to the contact details associated with the vehicle owner to receive a response from the vehicle owner. Alternatively, the suSLS 258 may send a Uniform Resource Locator (URL) (e.g., preferably of OEM server) to the contact details associated with the vehicle owner to receive the response from the vehicle owner. Further, to send the response, the vehicle owner may enter the received OTP in a mobile application (e.g., an OEM mobile application) or any web-portal (e.g., an OEM web-portal) within a predefined timeout limit. Alternatively, the vehicle owner may click on the received URL to send the response.

Further, upon receiving the response from the vehicle owner, the suSLS 258 may check (or verify) the OTP received from the vehicle owner or accepted URL. Further, upon successful matching of the OTP (or the accepted URL), the suSLS 258 may confirm the authentication of the vehicle owner and proceed for further processing.

In some embodiments, upon unsuccessful matching of the OTP (or the vehicle owner may not enter the correct received OTP within the predefined timeout limit), in such cases, the suSLS 258 may notify the vuSLC 234 and the vehicle owner that the trip preparation process is aborted using the features UI 214. In some embodiments, the suSLS 258 may re-attempt one or more times the authentication process before sending the final notification to the vehicle owner.

Further, upon successful authentication, the suSLS 258 may send a microservice ID request to the sSTO 250 to receive a set of microservice IDs corresponding to the set of feature IDs. The microservice ID request may include the set of feature IDs. Further, the sSTO 250 may extract the set of microservice IDs from the feature - microservice mapping table 268 using the set of feature IDs. Further, the sSTO 250 may send the set of microservice IDs corresponding to the set of feature IDs to the suSLS 258. Additionally, the sSTO 250 may store the set of microservice IDs corresponding to the set of feature IDs to the place detail table 262. Further, the sSTO 250 may trim the place detail table 600 to obtain the trimmed place detail table. Further, the suSLS 258 may send the set of microservice IDs to the vuSLC 234. Upon receiving the set of microservice IDs the vuSLC 234 may invoke the vuSDC 236.

Referring now to FIG. 8, an exemplary place detail - feature mapping table 800 (as analogous to the place detail - feature mapping table 266) representing the place details mapped with feature ID is illustrated, in accordance with some embodiment of the present disclosure. FIG. 8 is explained in conjunction with FIGS. 5 - 7. In particular, the place detail - feature mapping table 800 may be used to store a mapping between the place attributes, the place sub-attributes, and the place condition threshold with the one or more features IDs of the vehicle. It should be noted that the one or more feature IDs may correspond to the one place condition threshold.

The place detail - feature mapping table 800 is populated and maintained by the vehicle manufacturer only (e.g., OEM). The vehicle manufacturer may add (or remove) data (or table entities) any time from the place detail - feature mapping table 800 as per the vehicle requirement. In some embodiments, the vehicle manufacturer may maintain multiple such tables for a fleet of vehicles (i.e. vehicles of same model or different models). By way of an example, the table place detail - feature mapping table 800 may correspond to a model (i.e. VIN) of the vehicle. The place detail - feature mapping table 800 may include the column for the place attribute 606, the column for the place sub-attribute 608, a column for the place condition threshold 802, a column for the real time analysis attribute 804, and a column for the feature ID 806.

The place condition threshold 802 may include threshold values corresponding to the place sub-attributes. The real time analysis attribute 804 may include an indication for real time analysis of the place attributes and the place sub-attributes (i.e. if the real-time analysis is required or not). The real time analysis 804 may include some values such as 'Yes', 'No', 'NA' (i.e. not applicable), and the like. Each of these values may be determined by the vehicle manufacturer based on the type of place attribute and place sub-attribute.

In continuation with the above example, following are some exemplary place condition threshold values, and real time analysis attribute values mapped with the feature ID is presented in the place detail-feature mapping table 800. Remaining values can be referred to in the place detail-feature mapping table 800 presented in FIG. 8.

By way of an example, the place attribute 606 may be 'Road', the place sub-attribute 608 may be 'Potholes', the place condition threshold 802 may be 'Major', the real time analysis attribute 804 may be 'No', and the feature ID 806 may be 'SHOCK_ABSHORBER_01'.

By way of an example, the place attribute 606 may be 'Weather', the place sub-attribute 608 may be 'Temperature', the place condition threshold 802 may be '40', the real time analysis attribute 804 may be 'Yes', and the feature ID 806 may be 'SEAT_COOLING_01'.

By way of an example, the place attribute 606 may be 'Special Places', the place sub-attribute 608 may be 'Hospital', the place condition threshold 802 may be 'NA', the real time analysis attribute 804 may be 'No', and the feature ID 806 may be 'NO_HORN_01'.

Referring back to FIG. 6, the place detail table 600 may further include the place condition threshold column 802, the real time analysis attribute column 804, and the feature ID column 806. By way of an example, sSTO 250 may add the three columns to the place detail table 600. In continuation with the above example, following are some exemplary place condition threshold values, and the real time analysis attribute values mapped with the feature ID may be merged with the corresponding place detail table 600.

By way of an example, the place name 602 may be 'Place-1', the place address 604 may be 'Address-A', the place attribute 606 may be 'Road', the place sub-attribute 608 may be 'Potholes', the place condition threshold 802 may be 'Major', the real time analysis attribute 804 may be 'No', and the feature ID 806 may be 'SHOCK_ABSHORBER_01'.

By way of an example, the place name 602 may be 'Place-1', the place address 604 may be 'Address- C - F', the place attribute 606 may be 'Weather', the place sub-attribute 608 may be 'Temperature', the place condition threshold 802 may be '42', the real time analysis attribute 804 may be 'Yes', and the feature ID 806 may be 'SEAT_COOLING_01'.

By way of an example, the place name 602 may be 'Place-2', the place address 604 may be 'Address-H', the place attribute 606 may be 'Special', the place sub-attribute 608 may be 'Hospital', the place condition threshold 802 may be 'NA', the real time analysis attribute 804 may be 'No', and the feature ID 806 may be 'NO_HORN_01'.

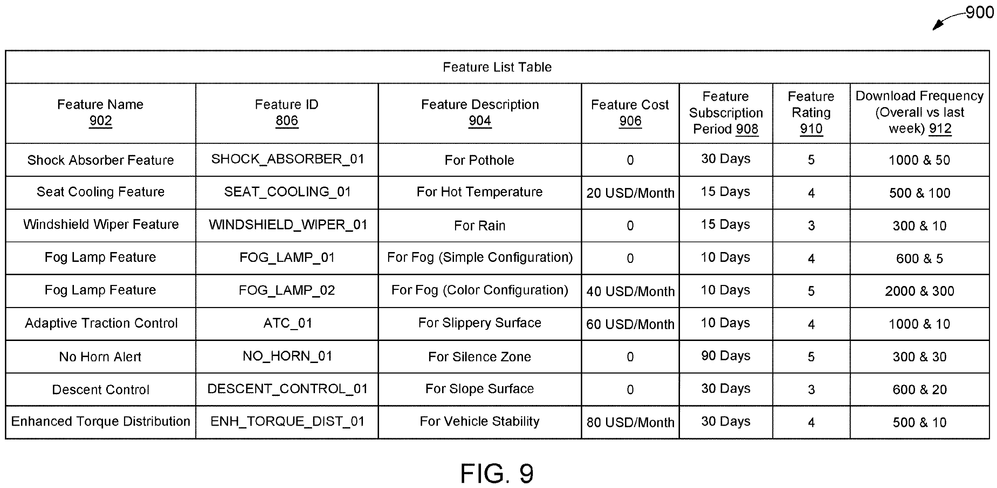

Referring now to FIG. 9, an exemplary feature list table 900 (as analogous to the feature list table 264) representing the feature details corresponding to the feature IDs is illustrated, in accordance with some embodiment of the present disclosure. FIG. 9 is explained in conjunction with FIGS. 5 - 8. The feature list table 900 may include one or more of the feature details (such as the feature name, the feature ID, the feature description, the feature cost, the feature rating, the feature download frequency, and the like. The feature list table 900 may be populated and maintained by the vehicle manufacturer (i.e., OEM), whenever there are needs or updates from the vehicle manufacturer. It should be noted that the vehicle manufacturer may also add (or remove) data, or increase (or decrease) any parameter anytime from the feature list table 900 as per the requirement.

The feature list table 900 may include a column for the feature name 902, the column for the feature ID 806, a column for the feature description 904, a column for the feature cost 906, a column for the feature subscription period 908, a column for the feature rating 910, and a column for the feature download frequency 912. The feature name 902 may include the name of the features of the vehicle. The feature description 904 may include a unique identifier of the features of the vehicle. The feature cost 906 may include subscription-details (e.g., either free or paid) of the feature, that the user will incur when the features may be used in the vehicle. The feature subscription period 908 may include maximum time for which the feature may be deployed and/or used in the vehicle, once the feature is deployed in the vehicle. The feature rating 910 may include average-rating of all the ratings that one or more customers may have provided to the feature after using it, with 0 being lowest and 5 being highest. The feature download frequency 912 may include number of downloads of the features, for overall time (i.e. since the feature is available to customers) and for the last one week.

In continuation with the above example, following are some exemplary feature details values corresponding to the feature IDs is presented in the feature list table 900. Remaining values can be referred to in the feature list table 900 presented in FIG. 9.

By way of an example, the feature name 902 may be 'Shock Absorber Feature', the feature ID 806 may be 'SHOCK_ABSORBER_01', the feature description 904 may be 'For Pothole', the feature cost 906 may be '0', the feature subscription period 908 may be '30 days', the feature rating 910 may be '5', and the feature download frequency 912 may be '1000 & 50'.

The feature name 902 may be 'Seat Cooling Feature', the feature ID 806 may be 'SEAT_COOLING_01', the feature description 904 may be 'For Hot Temperature ', the feature cost 906 may be '20 USD/Month ', the feature subscription period 908 may be '15 days', the feature rating 910 may be '4', and the feature download frequency 912 may be '500 & 100'.

The feature name 902 may be 'No Horn Alert, the feature ID 806 may be 'NO_HORN_01', the feature description 904 may be 'For Silence Zone', the feature cost 906 may be '0', the feature subscription period 908 may be '90 days', the feature rating 910 may be '5', and the feature download frequency 912 may be '300 & 30'.

Referring back to FIG. 6, the place detail table 600 may further include feature subscription period column 908. The feature subscription period column 908 may be added to the place detail table 600 by the sSTO 250.

In continuation with the above example, the place name 602 may be 'Place-1', the place address 604 may be 'Address-A', the place attribute 606 may be 'Road', the place sub-attribute 608 may be 'Potholes', the place condition threshold 802 may be 'Major', the real time analysis attribute 804 may be 'No', the feature ID 806 may be 'SHOCK_ABSHORBER_01', and the feature subscription period 908 may be '30 days'.

The place name 602 may be 'Place-1', the place address 604 may be 'Address- C - F', the place attribute 606 may be 'Weather', the place sub-attribute 608 may be 'Temperature', the place condition threshold 802 may be '42', the real time analysis attribute 804 may be 'Yes', the feature ID 806 may be 'SEAT_COOLING_01', and the feature subscription period 908 may be '15 days'.

The place name 602 may be 'Place-2', the place address 604 may be 'Address-H', the place attribute 606 may be 'Special', the place sub-attribute 608 may be 'Hospital', the place condition threshold 802 may be 'NA', the real time analysis attribute 804 may be 'No', the feature ID 806 may be 'NO_HORN_01', and the feature subscription period 908 may be '90 days'.

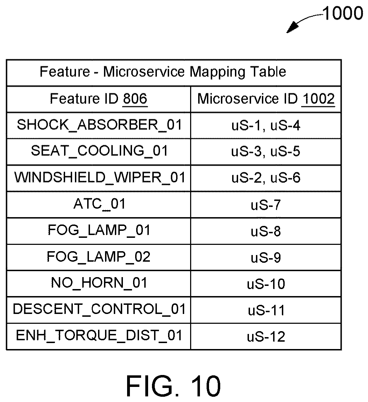

Referring now to FIG. 10, an exemplary feature - microservice mapping table 1000 (such as the feature - microservice mapping table 274) representing the feature IDs mapped with the microservice IDs is illustrated, in accordance with some embodiment of the present disclosure. FIG. 10 is explained in conjunction with FIGS. 5 - 9. The feature - microservice mapping table 1000 may be used to store a mapping of features with microservices of the vehicle such as the feature IDs and the microservices IDs. Further, each of the set of microservice IDs may correspond to the one feature ID. The feature - microservice mapping table 1000 may be populated and maintained by the vehicle manufacturer only, whenever there are needs or updates from the vehicle manufacturer. So, the vehicle manufacturer may add (or remove), increase or decrease any entries of the table anytime.

The feature - microservice mapping table 1000 may be presented in a tabular format. The feature - microservice mapping table 1000 may include the column for the feature ID 806, and a column for the microservice ID 1002. The microservice ID 1002 may include a unique identifier of the microservices corresponding to the features of the vehicle. In continuation with the above example, following are some exemplary feature IDs mapped with the corresponding microservice IDs.

The feature ID 806 may be 'SHOCK_ABSHORBER_01', and the corresponding microservice ID 1002 may be 'uS-1, uS-4'.

The feature ID 806 may be 'SEAT_COOLING_01', and the corresponding microservice ID 1002 may be 'uS-3, uS-5'.

The feature ID 806 may be 'NO_HORN_01', and the corresponding microservice ID 1002 may be 'uS-10'.

Referring back to FIG. 6, the place detail table 600 may further include microservice ID column 1002. The microservice ID column 1002 may be added to the place detail table 600 by the sSTO 250.

In continuation with the above example, following are some exemplary microservice IDs merged with the place detail table 600 corresponding to the feature IDs is presented in the feature - microservice mapping table 1000. Remaining values can be referred to in the feature - microservice mapping table 1000 presented in FIG. 10.

By way of an example, the place name 602 may be 'Place-1', the place address 604 may be 'Address-A', the place attribute 606 may be 'Road', the place sub-attribute 608 may be 'Potholes', the place condition threshold 802 may be 'Major', the real time analysis attribute 804 may be 'No', the feature ID 806 may be 'SHOCK_ABSHORBER_01', and the microservice ID 1002 may be 'uS-3, uS-5'.

The place name 602 may be 'Place-1', the place address 604 may be 'Address- C - F', the place attribute 606 may be 'Weather', the place sub-attribute 608 may be 'Temperature', the place condition threshold 802 may be '42', the real time analysis attribute 804 may be 'Yes', the feature ID 806 may be 'SEAT_COOLING_01', the feature subscription period 908 may be '15 days', and the microservice ID 1002 may be 'uS-3, uS-5'.

The place name 602 may be 'Place-2', the place address 604 may be 'Address-H', the place attribute 606 may be 'Special', the place sub-attribute 608 may be 'Hospital', the place condition threshold 802 may be 'NA', the real time analysis attribute 804 may be 'No', the feature ID 806 may be 'NO_HORN_01', the feature subscription period 908 may be '90 days', and the microservice ID 1002 may be 'uS-10'.

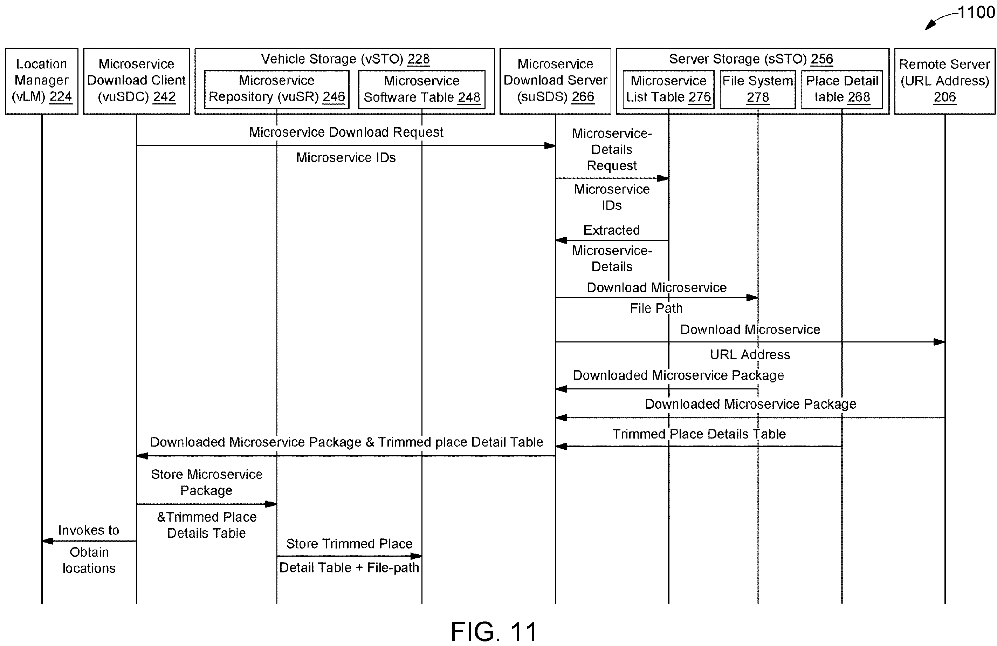

Referring now to FIG. 11, a detailed exemplary communication flow 1100 for downloading microservices to the vehicle is illustrated, in accordance with some embodiments of the present disclosure. FIG. 11 is explained in conjunction with FIGS. 5 - 10.

Upon receiving the set of microservice IDs that are generated and stored previously through the communication flow 700. The vuSDC 236 may send a microservice download request to the suSDS 260 to download the set of microservices to the vehicle. The microservice download request may include the set of microservice IDs corresponding to the set of feature IDs. Further, the suSDS 260 may send a microservice detail request to the sSTO 250 to retrieve microservice details to download the set of microservices to the vehicle. The microservice details may include, for example, but may not be limited to, a microservice description, and a microservice address. The microservice detail request may include the set of microservice IDs.

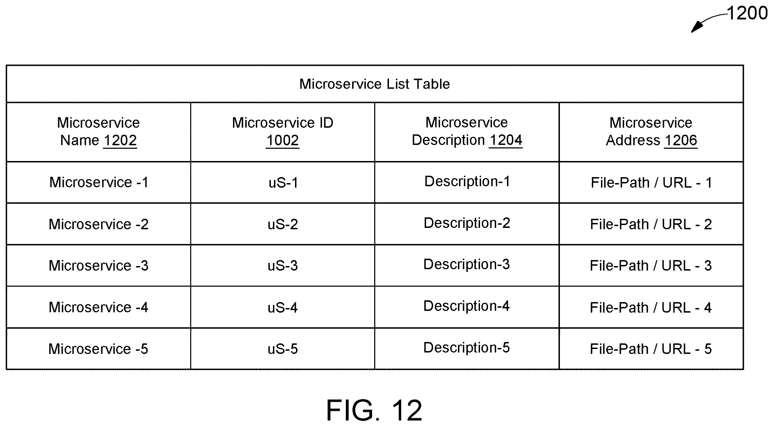

Further, the sSTO 250 may extract the microservice-details from the microservice list table 270 using the set of microservice IDs. The microservice list table 270 is further explained in greater detail in conjunction with FIG. 12. Further, the sSTO 250 may send the microservice-details corresponding to each of the set of microservice IDs to the suSDS 260. Further, the suSDS 260 may extract one or more addresses from the microservice-details. Further, upon extracting the one or more addresses, suSDS 260 may send a request to the one or more addresses to download a set of microservice packages (or contents of the microservice packages) corresponding to the set of microservice IDs.

By way of an example, if the extracted one or more addresses may be a file-path (i.e. the content of the set of microservice packages may be stored within the server 204), in such cases, the suSDS 260 may send a request to the sSTO 250 to download the set of microservice packages corresponding to the one or more file-path addresses.

Alternatively, if the extracted one or more addresses may be a URL (i.e. the content of the set of microservice packages may be stored outside of the server 204) instead of the file-path. By way of an example, the content of the set of microservice packages may be stored within the remote server 206. In such cases, the suSDS 260 may send a request to the remote server 206 to download the set of microservice packages corresponding to the one or more URL address.

In an embodiment, the suSDS 260 may receive the set of microservice packages from the server 204 (i.e., the OEM server). Additionally, the suSDS 260 may receive the trimmed place detail table 262 from the sSTO 250. In particular, the sSTO 250 may extract the set of microservice packages corresponding to the set of microservice IDs from the file system 272 using the one or more file path addresses based on the received request. Further, the sSTO 250 may send the set of microservice packages to the suSDS 260.

Alternatively, if suSDS 260 may receive the set of microservice packages from the remote server 206, then the sSTO 250 may extract the set of microservice packages corresponding to the set of microservice IDs from the remote server 206 using the one or more URL addresses based on the received request. Further, the sSTO 250 may send the set of microservice packages to the suSDS 260.

Additionally, the sSTO 250 may send the trimmed place detail table to the suSDS 260. Upon receiving the set of microservice packages and the trimmed place detail table, the suSDS 260 may send the set of microservice packages and the trimmed place detail table to the vuSDC 236. Further, the vuSDC 236 may send the set of microservice packages and the trimmed place detail table to the vSTO 228 in the vehicle for the storage. The vSTO 228 may store the set of microservice packages in the vuSR 240. Additionally, the vSTO 228 may store the trimmed place detail table in the microservice software table 242. Further, the vSTO 228 may store one or more file-paths of the vuSR 240 corresponding to the stored set of microservice packages in the microservice software table 242.

Additionally, the vuSDC 236 may invoke the vLM 224 to obtain locations from one or more external location service on the remote server 206.

Referring now to FIG. 12, an exemplary microservice list table 1200 (such as the microservice list table 270) representing microservice details is illustrated, in accordance with some embodiments of the present disclosure. FIG. 12 is explained in conjunction with FIGS. 5 - 11. The microservice list table 1200 may be used to store the microservice-details corresponding to the set of microservice IDs. The microservice list table 1200 is populated and maintained by the vehicle manufacturer (i.e., the OEM). The vehicle manufacturer may add (or remove) table entries, or increase (or decrease) any parameter of the microservice list table 1200 anytime as per the requirement.

The microservice list table 1200 is presented in a tabular format. The microservice list table 1200 may include a column for microservice name 1202, the column for microservice ID 1002. A column for microservice description 1204, and a column for the microservice address 1206. The microservice name 1202 may include name of the microservices of the vehicle. The microservice description 1204 may include the details of the microservices of the vehicle. The microservice address 1206 may include storage locations of the set of microservice packages. It may be either a file-path or an URL address. The file-path may correspond to a location of the content that is stored within the vehicle storage (i.e., vSTO 228) and the URL may correspond to a remote location of the content (i.e., the remote server 206) that is stored outside of the server 204.

In continuation with the above example, following are some exemplary microservice details corresponding to the microservice IDs presented in the microservice list table 1200. Remaining microservice details can be referred to in the microservice list table 1200 presented in FIG. 12.

By way of an example, the microservice name 1202 may be 'Microservice-3', the microservice ID 1002 may be 'uS-3', the microservice description 1204 may be 'Description-3', and the microservice address 1206 may be 'File path/URL - 3'.

The microservice name 1202 may be 'Microservice-4', the microservice ID 1002 may be 'uS-4', the microservice description 1204 may be 'Description-4', and the microservice address 1206 may be 'File path/URL - 4'.

The microservice name 1202 may be 'Microservice-1', the microservice ID 1002 may be 'uS-1', the microservice description 1204 may be 'Description-1', and the microservice address 1206 may be 'File path/URL - 1'.

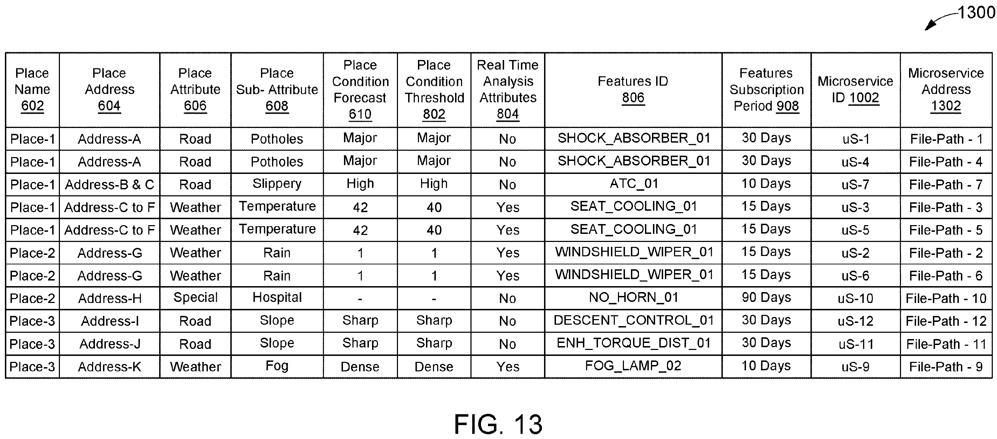

Referring now to FIG. 13, an exemplary microservice software table 1300 (as analogous to the microservice software table 242) representing microservice address mapped with a trimmed place detail table is illustrated, in accordance with some embodiments of the present disclosure. FIG. 13 is explained in conjunction with FIGS. 5 - 12. The microservice software table 1300 is presented in a tabular format. The microservice software table 1300 may include the column for the place name 602, the column for the place address 604, the column for the place attribute 606, the column for the place sub- attribute 608, the column for the place condition forecast 610, the column for the place condition threshold 802, the column for the real time analysis attribute 804, the column for the feature ID 806, the column for the feature subscription period 908, the column for the microservice ID 1002, and the column for the microservice address 1302.

The microservice address 1302 may include file-paths to storage locations of the set of microservice packages. In continuation with the above example, following are some exemplary microservice address values mapped the trimmed place detail table. Remaining values can be referred to in the microservice software table 1300 presented in FIG. 13.

By way of an example, the place name 602 may be 'Place-1', the place address 604 may be 'Address-A', the place attribute 606 may be 'Road', the place sub-attribute 608 may be 'Potholes', the place condition threshold 802 may be 'Major', the real time analysis attribute 804 may be 'No', the feature ID 806 may be 'SHOCK_ABSHORBER_01', the microservice ID 1002 may be 'uS-3, uS-5', and the microservice address 1302 may be 'File-path - 1'.

The place name 602 may be 'Place-1', the place address 604 may be 'Address- C - F', the place attribute 606 may be 'Weather', the place sub-attribute 608 may be 'Temperature', the place condition threshold 802 may be '42', the real time analysis attribute 804 may be 'Yes', the feature ID 806 may be 'SEAT_COOLING_01', the feature subscription period 908 may be '15 days', the microservice ID 1002 may be 'uS-3, uS-5', and the microservice address 1302 may be 'File-path - 7'.

The place name 602 may be 'Place-2', the place address 604 may be 'Address-H', the place attribute 606 may be 'Special', the place sub-attribute 608 may be 'Hospital', the place condition threshold 802 may be 'NA', the real time analysis attribute 804 may be 'No', the feature ID 806 may be 'NO_HORN_01', the feature subscription period 908 may be '90 days', the microservice ID 1002 may be 'uS-10', and the microservice address may be 'File-path - 10'.

Referring now to FIGS. 14A and 14B, a detailed exemplary communication flow 1400 for deploying a set of microservices in the vehicle is illustrated, in accordance with some embodiments of the present disclosure. FIGS. 14A and 14B are explained in conjunction with FIGS. 5 - 13.

To deploy the set of microservices in the vehicle as per the current requirement of the vehicle, the vLM 224 may send a request to the one or more external services (e.g., the location service, or the navigation service) on the remote server 206 to receive nearby N-addresses range (also including current location) from a current location of the vehicle. It should be noted that the N-addresses range may also include the current location of the vehicle. Alternatively, in case of network un-availability, the vLM 224 may send a request to a GPS of the vehicle to receive the nearby N-addresses range from the current location of the vehicle.

In other words, the vLM 224 may keep sending the request to the one or more external service (or GPS of the vehicle) to receive the N-addresses range from the current location of the vehicle. Further, vLM 224 may receive the N-addresses range either from the remote server 206 (or GPS of the vehicle). Further, vLM 224 may invoke the vuSDM 222 by passing the N-addresses range. Upon receiving the N-addresses range, the vuSDM 222 may send a request to the vSTO 228 to receive deployment details to deploy each of the microservice packages of the set of microservice packages based on the location that the vehicle is going to be reached. The deployment details may include, for example, but may not be limited to, the place address, the place attribute, the place sub-attribute, the place condition forecast, the place condition threshold, the real time analysis attribute, the feature ID, the feature subscription period, and the microservice ID, and the microservice address.

Further, based on the request, the vSTO 228 may compare each of the received N-addresses range against the place address column 604 of the microservice software table 242. Further, upon successful comparison, the vSTO 228 may extract the deployment details corresponding to the matched place address from the microservice software table 242. Further, the vSTO 228 may send the deployment details corresponding to the matched place address to the vuSDM 222.

Upon receiving the deployment details corresponding to the matched place address, the vuSDM 222 may check each of the row values (i.e., Yes or No) from the real time analysis attribute column 804 corresponding to the received deployment details of the microservice software table 242. In some embodiments, if the extracted row value may be 'No', then, in such cases, the vuSDM 222 may extract the file path from the corresponding row of the microservice address column 1302. Additionally, the vuSDM 222 may extract the data from the corresponding row of the feature subscription period column 908 corresponding to the deployment details. Similarly, the vuSDM 222 may extract the data from the corresponding columns until all the row values from the real time analysis attribute column 804 are processed.

In some other embodiments, if the extracted row value may be 'Yes', then, in such cases, the vuSDM 222 may extract the corresponding row data from place attribute column 606 and the place sub-attribute column 608 of the deployment details. Further, the vuSDM 222 may send a request to the vSM 226 to receive the real time analysis data corresponding to the extracted place attribute value, the place sub-attribute value, and the matched place address value. The request may include the extracted place attribute value, the place sub-attribute value, and the matched place address value.

Further, the vSM 226 may collect the real-time data corresponding to the place attribute value, the place sub-attribute value, and the matched place address value using a sensor (e.g., a temperature sensor) of the vehicle. Further, the vSM 226 may send the collected real-time data to the vuSDM 222. Further, upon receiving the real-time data, the vuSDM 222 may compare the real-time data against corresponding row of place condition threshold column 802 of the deployment-details corresponding to the place attribute value, the place sub-attribute value, and the matched place address values.

In some embodiments, if the real time data is less than the place condition threshold value, then, in such cases, the vuSDM 222 may notify the user of the vehicle through the features UI 214 that the deployment of the microservice corresponding to the particular feature is aborted. In some other embodiments, if the place condition threshold value may have changed and the vehicle feature may not require any more, also in such cases, vuSDM 222 may also notify the user of the vehicle that the deployment of the microservice for the particular feature is aborted. Similarly, all the row values from the real time analysis attribute column 804 are processed.

Alternatively, if the received real-time data is equal or above the place condition threshold value, then, in such cases, the vuSDM 222 may extract the file-path from the corresponding row of the microservice address column 1302 and extract the data from corresponding row of the feature subscription period column 908 of the deployment details. Similarly, all the row values from the real time analysis attribute column 804 are processed.

Further, the vuSDM 222 may access the file paths of the vuSR 240 of the vSTO 228 to receive the microservice package. Further, the vuSDM 222 may receive the set of microservice packages from the vuSR 240. Further, the vuSDM 222 may deploy the set of microservices on the vehicle corresponding to the set of microservice packages.

Additionally, the vuSDM 222 may determine the feature subscription period corresponding to the each deployed microservice of the set of microservices. The vuSDM 222 may monitor a time-period for each of the set of microservices deployed in the vehicle. To monitor the time period of the deployed microservices, the vuSDM 222 may compare the monitored time-period continuously with the corresponding feature subscription period of the deployed microservice. Based on the comparison, the vuSDM 222 may uninstall the deployed microservice from the vehicle, once the monitored time-period is over and above the feature subscription period.

Alternatively, the vuSDM 222 may also uninstall the deployed microservice from the vehicle based on a request received from the user anytime during the journey. Additionally, the vuSDM 222 may track the usage of each of the set of microservices deployed on the vehicle to generate a feature usage report. The feature usage report may include, for example, but may not be limited to, a timestamp, the location details corresponding to each of the deployed microservices. The vuSDM 222 may periodically send the feature usage report to sRBM 252 (e.g., either after the vehicle journey completion or at some other pre-defined periods), so that the vehicle manufacturer may use the feature usage report for performing billing & other tasks. Alternatively, the vuSDM 222 may send the feature usage report to the sRBM 252 based on a request received from the user (or the server 204) anytime.

As will be also appreciated, the above-described techniques may take the form of computer or controller implemented processes and apparatuses for practicing those processes. The disclosure can also be embodied in the form of computer program code containing instructions embodied in tangible media, such as floppy diskettes, solid state drives, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

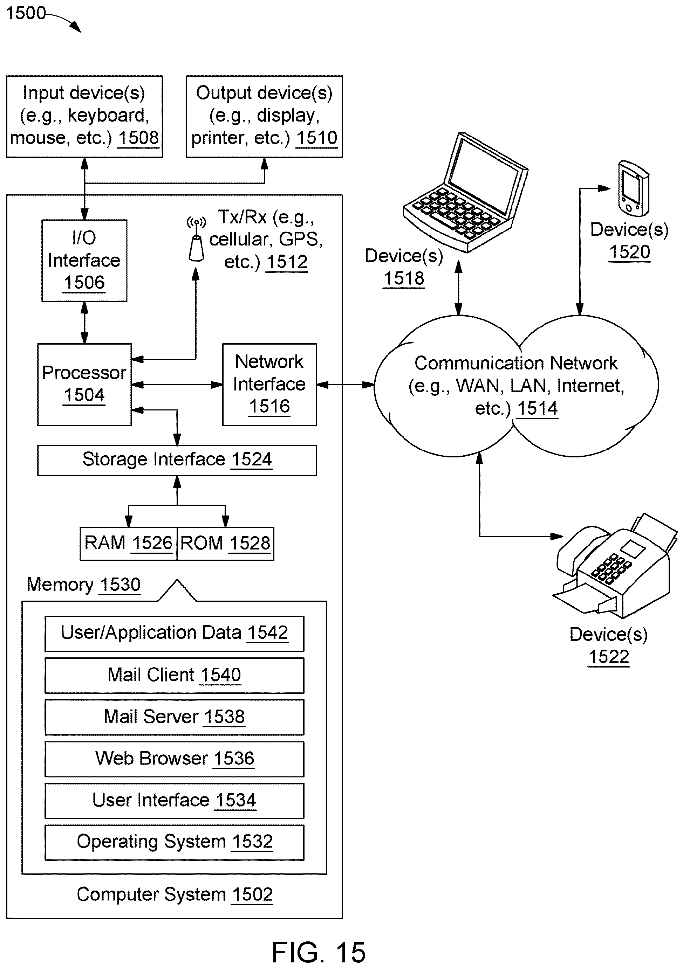

The disclosed methods and systems may be implemented on a conventional or a general-purpose computer system, such as a personal computer (PC) or server computer. Referring now to FIG. 15, a block diagram 1500 of an exemplary computer system 1502 for implementing embodiments consistent with the present disclosure is illustrated. Variations of computer system 1502 may be used for implementing system 100 for pre-fetching and deploying microservices in vehicles. The computer system 1502 may include a central processing unit ("CPU" or "processor") 1504. The processor 1504 may include at least one data processor for executing program components for executing user-generated or system-generated requests. A user may include a person, a person using a device such as those included in this disclosure, or such a device itself. The processor 1504 may include specialized processing units such as integrated system (bus) controllers, memory management control units, floating point units, graphics processing units, digital signal processing units, etc. The processor 1504 may include a microprocessor, such as AMD^{®} ATHLON^{®}, DURON^{®} OR OPTERON^{®}, ARM's application, embedded or secure processors, IBM^{®} POWERPC^{®}, INTEL^{®} CORE^{®} processor, ITANIUM^{®} processor, XEON^{®} processor, CELERON^{®} processor or other line of processors, etc. The processor 1504 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

The processor 1504 may be disposed in communication with one or more input/output (I/O) devices via I/O interface 1506. The I/O interface 1506 may employ communication protocols/methods such as, without limitation, audio, analog, digital, monoaural, RCA, stereo, IEEE-1394, near field communication (NFC), FireWire, Camera Link^{®}, GigE, serial bus, universal serial bus (USB), infrared, PS/2, BNC, coaxial, component, composite, digital visual interface (DVI), high-definition multimedia interface (HDMI), radio frequency (RF) antennas, S-Video, video graphics array (VGA), IEEE 802.n /b/g/n/x, Bluetooth, cellular (e.g., code-division multiple access (CDMA), highspeed packet access (HSPA+), global system for mobile communications (GSM), long-term evolution (LTE), WiMAX, or the like), etc.

Using the I/O interface 1506, the computer system 1502 may communicate with one or more I/O devices. For example, the input device 1508 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, altimeter, gyroscope, proximity sensor, or the like), stylus, scanner, storage device, transceiver, video device/source, visors, etc. Output device 1510 may be a printer, fax machine, video display (e.g., cathode ray tube (CRT), liquid crystal display (LCD), light-emitting diode (LED), plasma, or the like), audio speaker, etc. In some embodiments, a transceiver 1512 may be disposed in connection with the processor 1504. The transceiver may facilitate various types of wireless transmission or reception. For example, the transceiver may include an antenna operatively connected to a transceiver chip (e.g., TEXAS INSTRUMENTS^{®} WILINK WL1286^{®}, BROADCOM^{®} BCM45501UB8^{®}, INFINEON TECHNOLOGIES^{®} X-GOLD 1436-PMB9800^{®} transceiver, or the like), providing IEEE 802.11a/b/g/n, Bluetooth, FM, global positioning system (GPS), 2G/3G HSDPA/HSUPA communications, etc.

In some embodiments, the processor 1504 may be disposed in communication with a communication network 1516 via a network interface 1514. The network interface 1514 may communicate with the communication network 1516. The network interface may employ connection protocols including, without limitation, direct connect, Ethernet (e.g., twisted pair 10/100/1000 Base T), transmission control protocol/internet protocol (TCP/IP), token ring, IEEE 802.11a/big/n/x, etc. The communication network 1516 may include, without limitation, a direct interconnection, local area network (LAN), wide area network (WAN), wireless network (e.g., using Wireless Application Protocol), the Internet, etc. Using the network interface 1514 and the communication network 1516, the computer system 1502 may communicate with devices 1518, 1520, and 1522. These devices may include, without limitation, personal computer(s), server(s), fax machines, printers, scanners, various mobile devices such as cellular telephones, smartphones (e.g., APPLE^{®} IPHONE^{®}, BLACKBERRY^{®} smartphone, ANDROID^{®} based phones, etc.), tablet computers, eBook readers (AMAZON^{®} KINDLE^{®}, NOOK^{®} etc.), laptop computers, notebooks, gaming consoles (MICROSOFT^{®} XBOX^{®}, NINTENDO^{®} DS^{®}, SONY^{®} PLAYSTATION^{®}, etc.), or the like. In some embodiments, the computer system 1502 may itself embody one or more of these devices.

In some embodiments, the processor 1504 may be disposed in communication with one or more memory devices 1530 (e.g., RAM 1526, ROM 1528, etc.) via a storage interface 1524. The storage interface may connect to memory devices 1530 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), STD Bus, RS-232, RS-422, RS-485, I2C, SPI, Microwire, 1-Wire, IEEE 1284, Intel^{®} QuickPathlnterconnect, InfiniBand, PCle, etc. The memory drives may further include a drum, magnetic disc drive, magneto-optical drive, optical drive, redundant array of independent discs (RAID), solid-state memory devices, solid-state drives, etc.

The memory devices 1530 may store a collection of program or database components, including, without limitation, an operating system 1532, user interface application 1534, web browser 1536, mail server 1538, mail client 1540, user/application data 1542 (e.g., any data variables or data records discussed in this disclosure), etc. The operating system 1532 may facilitate resource management and operation of the computer system 1502. Examples of operating systems include, without limitation, APPLE^{®} MACINTOSH^{®} OS X, UNIX, Unix-like system distributions (e.g., Berkeley Software Distribution (BSD), FreeBSD, NetBSD, OpenBSD, etc.), Linux distributions (e.g., RED HAT^{®}, UBUNTU^{®}, KUBUNTU^{®}, etc.), IBM^{®} OS/2, MICROSOFT^{®} WINDOWS^{®} (XP^{®}, Vista^{®}/7/8, etc.), APPLE^{®} IOS^{®}, GOOGLE^{®} ANDROID^{®}, BLACKBERRY^{®} OS, or the like. User interface 1534 may facilitate display, execution, interaction, manipulation, or operation of program components through textual or graphical facilities. For example, user interfaces may provide computer interaction interface elements on a display system operatively connected to the computer system 1502, such as cursors, icons, check boxes, menus, scrollers, windows, widgets, etc. Graphical user interfaces (GUls) may be employed, including, without limitation, APPLE^{®} MACINTOSH^{®} operating systems' AQUA^{®} platform, IBM^{®} OS/2^{®}, MICROSOFT^{®} WINDOWS^{®} (e.g., AERO^{®}, METRO^{®}, etc.), UNIX X-WINDOWS, web interface libraries (e.g., ACTIVEX^{®}, JAVA^{®}, JAVASCRIPT^{®}, AJAX^{®}, HTML, ADOBE^{®} FLASH^{®}, etc.), or the like.

In some embodiments, the computer system 1502 may implement a web browser 1536 stored program component. The web browser may be a hypertext viewing application, such as MICROSOFT^{®} INTERNET EXPLORER^{®}, GOOGLE^{®} CHROME^{®}, MOZILLA^{®} FIREFOX^{®}, APPLE^{®} SAFARI^{®}, etc. Secure web browsing may be provided using HTTPS (secure hypertext transport protocol), secure sockets layer (SSL), Transport Layer Security (TLS), etc. Web browsers may utilize facilities such as AJAX^{®}, DHTML, ADOBE^{®} FLASH^{®}, JAVASCRIPT^{®}, JAVA^{®}, application programming interfaces (APIs), etc. In some embodiments, the computer system 1502 may implement a mail server 1538 stored program component. The mail server may be an Internet mail server such as MICROSOFT^{®} EXCHANGE^{®}, or the like. The mail server may utilize facilities such as ASP, ActiveX, ANSI C++/C#, MICROSOFT .NET^{®} CGI scripts, JAVA^{®}, JAVASCRIPT^{®}, PERL^{®}, PHP^{®}, PYTHON^{®}, WebObjects, etc. The mail server may utilize communication protocols such as internet message access protocol (IMAP), messaging application programming interface (MAPI), MICROSOFT^{®} EXCHANGE^{®}, post office protocol (POP), simple mail transfer protocol (SMTP), or the like. In some embodiments, the computer system 1502 may implement a mail client 1540 stored program component. The mail client may be a mail viewing application, such as APPLE MAIL^{®}, MICROSOFT ENTOURAGE^{®}, MICROSOFT OUTLOOK^{®}, MOZILLA THUNDERBIRD^{®}, etc.

In some embodiments, computer system 1502 may store user/application data 1542, such as the data, variables, records, etc. (e.g., place details, feature IDs, feature details, microservice IDs, microservice packages, and the like) as described in this disclosure. Such databases may be implemented as fault-tolerant, relational, scalable, secure databases such as ORACLE^{®} OR SYBASE^{®}. Alternatively, such databases may be implemented using standardized data structures, such as an array, hash, linked list, struct, structured text file (e.g., XML), table, or as object-oriented databases (e.g., using OBJECTSTORE^{®}, POET^{®}, ZOPE^{®}, etc.). Such databases may be consolidated or distributed, sometimes among the various computer systems discussed above in this disclosure. It is to be understood that the structure and operation of any computer or database component may be combined, consolidated, or distributed in any working combination.

Various embodiments provide a method and system for pre-fetching and deploying microservices in vehicles. The disclosed method and system may receive, in a vehicle, details corresponding to each of a plurality of places on a user-selected route from a server. The user-selected route may include a source point and a destination point. The place details corresponding to each of the plurality of places are dynamically mapped to one or more of a plurality of feature identifiers (IDs) in a server storage. Further, the disclosed method and system may transmit a feature request to the server for identification of the one or more of the plurality of feature IDs and corresponding one or more of the plurality of feature details. The feature request may include vehicle details of the vehicle and the received place details. Further, the disclosed method and system may receive the one or more of the plurality of feature IDs and corresponding one or more of the plurality of feature details from the server in response to the feature request. Each of the plurality of feature IDs is mapped to one or more microservice IDs in the server storage. Further, the disclosed method and system may transmit a microservice download request to the server for retrieval of a set of microservice packages corresponding to a user selection of a set of feature IDs from the one or more of the plurality of feature IDs. The microservice download request may include the vehicle details and a set of microservice IDs of the set of microservice packages corresponding to the set of feature IDs. Moreover, the disclosed method and system may receive the set of microservice packages corresponding to the set of feature IDs from the server in response to the microservice download request. Thereafter, the disclosed method and system may manage deployment of a set of microservices corresponding to the set of microservice packages based on predefined criteria.

Thus, the disclosed method and system try to overcome the technical problem of pre-fetching and deploying microservices in vehicles. The method and system may install features in the vehicle based on a real-time feature requirement of the vehicle. The method and system may ensure that the vehicle has all the features which will be required during the journey. The method and system may avoid the need for a vehicle manufacturer to carry out through market research (or analysis) to decide all the possible features that may be needed by a user. Additionally, the method and system may avoid the pre-installation of the number of features in the vehicle. The method and system may not require a large memory space to pre-store the number of features in the vehicle.

In light of the above-mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps clearly bring an improvement in the functioning of the device itself as the claimed steps provide a technical solution to a technical problem.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Although the present invention has been described in connection with some embodiments, it is not intended to be limited to the specific form set forth herein. Rather, the scope of the present invention is limited only by the claims. Additionally, although a feature may appear to be described in connection with particular embodiments, one skilled in the art would recognize that various features of the described embodiments may be combined in accordance with the invention.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method for pre-fetching and deploying microservices in vehicles, the method comprising:
receiving from a server by a computing device in a vehicle, place details corresponding to each of a plurality of places on a user-selected route, wherein the user-selected route comprises a source point and a destination point, and wherein the place details corresponding to each of the plurality of places are dynamically mapped to one or more of a plurality of feature identifiers, IDs, in a server storage;
transmitting, by the computing device, a feature request to the server for identification of the one or more of the plurality of feature IDs and corresponding one or more of a plurality of feature details, wherein the feature request comprises vehicle details of the vehicle and the received place details;
receiving, by the computing device, the one or more of the plurality of feature IDs and corresponding one or more of the plurality of feature details from the server in response to the feature request, wherein each of the plurality of feature IDs is mapped to one or more microservice IDs in the server storage;
transmitting, by the computing device, a microservice download request to the server for retrieval of a set of microservice packages corresponding to a user selection of a set of feature IDs from the one or more of the plurality of feature IDs, wherein the microservice download request comprises the vehicle details and a set of microservice IDs of the set of microservice packages corresponding to the set of feature IDs;
receiving, by the computing device, the set of microservice packages corresponding to the set of feature IDs from the server in response to the microservice download request; and
managing, by the computing device, deployment of a set of microservices corresponding to the set of microservice packages based on predefined criteria.

2. The method of claim 1, further comprising:
receiving, by the computing device, the source point and the destination point from a user using a routes user interface, UI;
rendering, by the computing device on a places UI, one or more routes between the source point and the destination point, and the plurality of places on each of the one or more routes, wherein the one or more routes and the plurality of places on each of the one or more routes are obtained from a navigation service; and
receiving, by the computing device from the places UI, the user-selected route from the one or more routes and the corresponding plurality of places.

3. The method of any preceding claim, further comprising:
rendering, by the computing device on a features UI, the received one or more of the plurality of feature IDs and the corresponding one or more of the plurality of feature details; and
receiving, by the computing device from the features UI, the user selection of the set of feature IDs from the one or more of the plurality of feature IDs.

4. The method of any of claims 1-3, further comprising:
prior to transmitting the microservice download request and upon successful authentication of a vehicle owner through an authentication technique,
transmitting, by the computing device, a microservice ID request to the server for retrieval of the set of microservice IDs corresponding to the user selection of the set of feature IDs, wherein the microservice ID request comprises the set of feature IDs and the vehicle details; and
retrieving, by the computing device, the set of microservice IDs corresponding to the set of feature IDs from the server in response to the microservice ID request.

5. The method of claim 4, wherein receiving the set of microservice packages further comprises:
downloading, by the computing device, the set of microservice packages and a trimmed place details database from the server, wherein the trimmed place details database comprises a mapping between each of the plurality of places and the set of microservice IDs corresponding to the set of microservices; and
storing, by the computing device, the downloaded set of microservice packages corresponding to each microservice of the list of microservices and the trimmed place details database in a vehicle data storage.

6. The method of any of claims 1-5, wherein managing deployment of the set of microservices comprises:
validating, by the computing device, the predefined criteria for each of the set of microservices; and
for each microservice package of the set of microservice packages, one of:
initiating, by the computing device, the deployment of the microservice package upon successful validation; or
blocking, by the computing device, the deployment of the microservice package corresponding to the one or more microservices upon failed validation.

7. A method for identifying and preparing microservices for vehicles, the method comprising:
receiving, by a server, a feature request from a computing device for a user-selected route between a source point and a destination point, wherein the feature request comprises vehicle details of a vehicle and place details corresponding to each of a plurality of places on the user-selected route, wherein the place details corresponding to each of the plurality of places are dynamically mapped to one or more of a plurality of feature identifiers, IDs, in a server storage;
identifying, by the server, the one or more of the plurality of feature IDs and corresponding one or more of a plurality of feature details from the server storage, based on the feature request;
transmitting, by the server, the one or more of the plurality of feature IDs and corresponding one or more of the plurality of feature details to the computing device, wherein each of the plurality of feature IDs is mapped to one or more microservice IDs in the server storage;
receiving, by the server, a microservice download request from the computing device for retrieval of a set of microservice packages corresponding to a user selection of a set of feature IDs from the one or more of the plurality of feature IDs, wherein the microservice download request comprises the vehicle details and a set of microservice IDs of the set of microservice packages corresponding to the set of feature IDs; and
transmitting, by the server, the set of microservice packages corresponding to the set of feature IDs to the computing device in response to the microservice download request.

8. The method of claim 7, further comprising:
receiving, by the server, the source point and the destination point from a routes user interface, UI, of the computing device;
retrieving, by the server, one or more routes and the plurality of places on each of the one or more routes between the source point and the destination point, and the plurality of places on each of the one or more routes from a navigation service;
transmitting, by the server to a places UI on the computing device, the one or more routes and the plurality of places on each of the one or more routes;
receiving, by the server, the user-selected route and the corresponding plurality of places from the computing device via the places Ul; and
transmitting, by the server, the place details corresponding to each of the plurality of places to the computing device.

9. The method of any of claims 7-8, wherein identifying the one or more of the plurality of feature IDs and corresponding one or more of the plurality of feature details comprises:
extracting, by the server, the one or more of the plurality of feature IDs from a place detail-feature mapping database based on the place details corresponding to each of the plurality of places and the vehicle details, wherein the place detail-feature mapping database comprises a mapping between the place details, a set of predefined rules, and the plurality of feature IDs, and wherein the place detail-feature mapping database is pre-stored in the server storage; and
extracting, by the server, the one or more of the plurality of feature details corresponding to the one or more of the plurality of feature IDs from a feature list database, wherein the feature list database comprises a mapping between the plurality of feature IDs and the corresponding plurality of feature details, and wherein the feature list database is pre-stored in the server storage.

10. The method of any of claims 7-9, further comprising authenticating, by the server, a vehicle owner through an authentication technique prior to transmitting the set of microservice packages to the computing device.

11. The method of any of claims 7-10, further comprising:
dynamically updating, by the server, a place details database based on real-time updates corresponding to the place details and a set of predefined rules, wherein the place details database comprises a mapping of the place details of each of the plurality of places, the set of predefined rules, the plurality of feature IDs, the corresponding plurality of feature details, and the one or more microservice IDs corresponding to each of one or more of the plurality of feature IDs;
preparing, by the server, a trimmed place details database from the place details database based on the user selection of the set of feature IDs from the one or more of the plurality of feature IDs; and
transmitting, by the server, the trimmed place details database along with the set of microservice packages to the computing device.

12. A computing device for pre-fetching and deploying microservices in vehicles, the computing device comprising:
a processor; and
a memory communicatively coupled to the processor, wherein the memory stores processor executable instructions, which, on execution, cause the processor to perform the method according to any of claims 1-6.

13. A server for identifying and preparing microservices for vehicles, the server comprising:
a processor;
a memory communicatively coupled to the processor, wherein the memory stores processor executable instructions, which, on execution, causes the processor to perform the method according to any of claims 7-11.

14. A computer readable medium comprising instructions that when executed by a processor cause the processor to perform the method according to any of claims 1-6.

15. A computer readable medium comprising instructions that when executed by a processor cause the processor to perform the method according to any of claims 7-11.
